(19) **Europäisches Patentamt / European Patent Office / Office européen des brevets**

(11) **EP 4 310 555 B1**

(12) **EUROPEAN PATENT SPECIFICATION**

(45) Date of publication and mention
of the grant of the patent:
**22.04.2026 Bulletin 2026/17**

(21) Application number: **23186773.0**

(22) Date of filing: **20.07.2023**

(51) International Patent Classification (IPC):
**G02B 5/00** *(2006.01)* **G03B 9/02** *(2021.01)*

(52) Cooperative Patent Classification (CPC):
**G02B 5/005; G03B 9/06**

(54) **IMAGING LENS ASSEMBLY AND ELECTRONIC DEVICE**

ABBILDUNGSLINSENANORDNUNG UND ELEKTRONISCHE VORRICHTUNG

ENSEMBLE LENTILLE D'IMAGERIE ET DISPOSITIF ÉLECTRONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.07.2022 US 202263368995 P**

(43) Date of publication of application:
**24.01.2024 Bulletin 2024/04**

(73) Proprietor: **Largan Precision Co. Ltd.**
**Taichung City 408 (TW)**

(72) Inventors:
• **HSU, Chih-Wen**
**408 Taichung City (TW)**

• **FAN, Chen-Wei**
**408 Taichung City (TW)**
• **CHOU, Ming-Ta**
**408 Taichung City (TW)**

(74) Representative: **Jakelski & Althoff**
**Patentanwälte PartG mbB**
**Patentanwälte**
**Partnerschaftsgesellschaft**
**Mollenbachstraße 37**
**71229 Leonberg (DE)**

(56) References cited:
US-A- 3 675 562    US-A1- 2009 185 065
US-A1- 2018 196 171    US-A1- 2021 033 846
US-B1- 9 749 532

EP 4 310 555 B1

**Description**

**BACKGROUND**

Technical Field

The present disclosure relates to an imaging lens assembly. More particularly, the present disclosure relates to an imaging lens assembly applicable to the portable electronic devices.

Description of Related Art

In recent years, portable electronic devices have developed rapidly. For example, intelligent electronic devices and tablets, etc., have been filled in the lives of modern people, and the imaging lens assemblies employed in the portable electronic devices have also prospered. However, as technology advances, the quality requirements of the imaging lens assembly are becoming higher and higher. Therefore, developing an imaging lens assembly which can provide the appropriate imaging effect becomes an important and solving problem in industry.

A prior art example of an imaging lens having a fixed light blocking aperture being formed of one part and having a polygonal shape is disclosed in US2018/0196171A1.

A prior art variable aperture used in imaging lenses and having undulating surface shapes of aperture blades is known from US 3 675 562.

**SUMMARY**

According to one aspect of the present disclosure, an imaging lens assembly includes a lens element and a light blocking element. The lens element is configured to define an optical axis, and the optical axis passes through the lens element. The light blocking element includes a light through hole and a plurality of light diminishing structures. The optical axis passes through the light through hole, the light through hole is formed by connecting a plurality of sidelines to define a polygonal contour. The light diminishing structures are regularly disposed along the polygonal contour, wherein the light diminishing structures are configured to undulate at least one portion of each of the sidelines, so that the at least one portion of each of the sidelines is a non-straight line. The light blocking element is formed as a single part. When a number of the sidelines is N, a length of each of the sidelines is TL, and a straight segment length of each of the sidelines is D, the following conditions are satisfied: 4 ≤ N ≤ 18; and 0.05 < D/TL < 0.95.

According to the imaging lens assembly of the aforementioned aspect, wherein a thickness of the light blocking element along the optical axis is T, and the following condition is satisfied: 2 μm ≤ T ≤ 88 μm.

According to the imaging lens assembly of the aforementioned aspect, wherein the polygonal contour is a regular polygon.

According to the imaging lens assembly of the aforementioned aspect, wherein the number of the sidelines is N, and the following condition is satisfied: 5 ≤ N ≤ 12.

According to the imaging lens assembly of the aforementioned aspect, wherein each of the light diminishing structures includes at least three nodes, and the nodes satisfy any one of the following two definitions: each of two sides of each of the light diminishing structures is one of the at least three nodes; and a horizontal baseline is defined by a virtual connection line of the two sides of each of the light diminishing structures, when an edge of the light blocking element is above and the light through hole is below, a point where a contour slope of each of the light diminishing structures changes from negative to positive is one of the at least three nodes. When two of the at least three nodes adjacent to each other form a connection line, two of the connection lines adjacent to each other form a deflection angle, the deflection angle is θ, and the following condition is satisfied: 0 degrees ≤ θ ≤ 20 degrees.

According to the imaging lens assembly of the aforementioned aspect, wherein when each of the connection lines is parallel to each of the sidelines, a length of each of the connection lines is W, a vertical distance from a midpoint of each of the connection lines to the edge of the light blocking element is H, and the following condition is satisfied: 0.04 ≤ H/W ≤ 0.7.

According to the imaging lens assembly of the aforementioned aspect, wherein a vertical distance from the midpoint of each of the connection lines to the edge of the light blocking element is H, and the following condition is satisfied: 5 μm ≤ H ≤ 120 μm.

According to the imaging lens assembly of the aforementioned aspect, wherein the light through hole of the light blocking element is configured to define an f-number of the imaging lens assembly.

According to the imaging lens assembly of the aforementioned aspect, wherein the f-number of the imaging lens assembly is FNO, and the following condition is satisfied: 0.65 ≤ FNO ≤ 1.8.

According to the imaging lens assembly of the aforementioned aspect, the imaging lens assembly may further include an anti-reflection layer disposed on an outer surface of the light blocking element.

According to one aspect of the present disclosure, an imaging lens assembly includes a lens element and a light blocking element. An optical axis passes through the lens element. The light blocking element includes a light through hole and a plurality of light diminishing structures. The optical axis passes through the light through hole, the light through hole is formed by connecting a plurality of sidelines to define a polygonal contour. The light diminishing structures are regularly disposed along the polygonal contour, wherein the light diminishing structures are configured to undulate each of the sidelines, so that the whole of each of the sidelines is a non-straight line. Each of the light diminishing structures includes at least three nodes, and the nodes satisfy any one of the following two definitions: each of two sides of each of the light diminishing structures is one of the at least three nodes; and a horizontal baseline is defined by a virtual connection line of the two sides of each of the light diminishing structures, when an edge of the light blocking element is above and the light through hole is below, a point where a contour slope of each of the light diminishing structures changes from negative to positive is one of the at least three nodes. The light blocking element is formed as a single part. When a number of the sidelines is N, two of the at least three nodes adjacent to each other form a connection line, two of the connection lines adjacent to each other form a deflection angle, and the deflection angle is $\theta$, the following conditions are satisfied: $4 \leq N \leq 18$; and $0$ degrees $\leq \theta \leq 20$ degrees.

According to the imaging lens assembly of the aforementioned aspect, wherein a length of each of the sidelines is TL, a straight segment length of each of the sidelines is D, and the following condition is satisfied: $0 < D/TL < 0.05$.

According to the imaging lens assembly of the aforementioned aspect, wherein a thickness of the light blocking element along the optical axis is T, and the following condition is satisfied: $2 \ \mu m \leq T \leq 88 \ \mu m$.

According to the imaging lens assembly of the aforementioned aspect, wherein the polygonal contour is a regular polygon.

According to the imaging lens assembly of the aforementioned aspect, wherein the number of the sidelines is N, and the following condition is satisfied: $5 \leq N \leq 12$.

According to the imaging lens assembly of the aforementioned aspect, wherein when each of the connection lines is parallel to each of the sidelines, a length of each of the connection lines is W, a vertical distance from a midpoint of each of the connection lines to the edge of the light blocking element is H, and the following condition is satisfied: $0.04 \leq H/W \leq 0.7$.

According to the imaging lens assembly of the aforementioned aspect, wherein the vertical distance from the midpoint of each of the connection lines to the edge of the light blocking element is H, and the following condition is satisfied: $5 \ \mu m \leq H \leq 120 \ \mu m$.

According to the imaging lens assembly of the aforementioned aspect, wherein the light through hole of the light blocking element is configured to define an f-number of the imaging lens assembly.

According to the imaging lens assembly of the aforementioned aspect, wherein the f-number of the imaging lens assembly is FNO, and the following condition is satisfied: $0.65 \leq FNO \leq 1.8$.

According to the imaging lens assembly of the aforementioned aspect, wherein the imaging lens assembly further includes an anti-reflection layer disposed on an outer surface of the light blocking element.

According to one aspect of the present disclosure, an electronic device includes the imaging lens assembly of any one the aforementioned aspects.

## BRIEF DESCRIPTION OF THE DRAWINGS

The present disclosure can be more fully understood by reading the following detailed description of the embodiment, with reference made to the accompanying drawings as follows:

Fig. 1A is a schematic view of an imaging lens assembly according to the 1st embodiment of the present disclosure.

Fig. 1B is the schematic view of a light blocking element according to the 1st example of the 1st embodiment of Fig. 1A.

Fig. 1C is a partial enlarged view of the light blocking element according to the 1st example of the 1st embodiment of Fig. 1B.

Fig. 1D is another partial enlarged view of the light blocking element according to the 1st example of the 1st embodiment of Fig. 1B.

Fig. 1E is the schematic view of a light blocking element according to the 2nd example of the 1st embodiment of Fig. 1A.

Fig. 1F is the schematic view of a light blocking element according to the 3rd example of the 1st embodiment of Fig. 1A.

Fig. 2A is a schematic view of an imaging lens assembly according to the 2nd embodiment of the present disclosure.

Fig. 2B is the schematic view of a light blocking element according to the 1st example of the 2nd embodiment of Fig. 2A.

Fig. 2C is a partial enlarged view of the light blocking element according to the 1st example of the 2nd embodiment of Fig. 2B.

Fig. 2D is the schematic view of a light blocking element according to the 2nd example of the 2nd embodiment of Fig. 2A.

Fig. 2E is the schematic view of a light blocking element according to the 3rd example of the 2nd embodiment of Fig. 2A.

Fig. 3A is a schematic view of an imaging lens assembly according to the 3rd embodiment of the present disclosure.

Fig. 3B is the schematic view of a light blocking element according to the 1st example of the 3rd embodiment of Fig. 3A.

Fig. 3C is the schematic view of a light blocking element according to the 2nd example of the 3rd embodiment of Fig. 3A.

Fig. 4A is a three-dimensional view of a light blocking element according to the 1st example of the 4th embodiment of the present disclosure not forming part of the claimed invention.

Fig. 4B is the schematic view of the light blocking element according to the 1st example of the 4th embodiment of Fig. 4A.

Fig. 4C a three-dimensional view of a light blocking element according to the 2nd example of the 4th embodiment of the present disclosure not forming part of the claimed invention.

Fig. 4D is the schematic view of the light blocking element according to the 2nd example of the 4th embodiment of Fig. 4C.

Fig. 5A is a schematic view of an electronic device according to the 5th embodiment of the present disclosure.

Fig. 5B is a block diagram of the electronic device according to the 5th embodiment of Fig. 5A.

## DETAILED DESCRIPTION

The present disclosure provides an imaging lens assembly includes a lens element and a light blocking element. The lens element is configured to define an optical axis, and the optical axis passes through the lens element. The light blocking element includes a light through hole and a plurality of light diminishing structures. The optical axis passes through the light through hole, the light through hole is formed by connecting a plurality of sidelines to define a polygonal contour, and the light diminishing structures are regularly disposed along the polygonal contour. When a number of the sidelines is N, the following condition is satisfied: $4 \leq N \leq 18$. The imaging effect of the imaging lens assembly can be changed through the light through hole which is polygonal-shaped. Further, the light blocking element can be a single part, such as a light blocking sheet, a lens barrel and a spacer element, etc., which block the passage of light.

The light diminishing structures are configured to undulate at least one portion of each of the sidelines, so that the at least one portion of each of the sidelines is a non-straight line. In detail, when each of the sidelines is undulate, the light diminishing structure is formed, and one unit of the light diminishing structure is between two straight line segments. Or, the light diminishing structures are configured to undulate each of the sidelines, so that the whole of each of the sidelines is the non-straight line, wherein two sides of the light diminishing structures connect to the sidelines, and whole of each of the sidelines is undulated by the light diminishing structures. Hence, the light diminishing structures are disposed along the polygonal contour to undulate each of the sidelines so as to moderately change the diffraction pattern of the light.

Each of the light diminishing structures includes at least three nodes, and the nodes satisfy any one of the following two definitions: each of two sides of each of the light diminishing structures is one of the at least three nodes; and a horizontal baseline is defined by a virtual connection line of the two sides of each of the light diminishing structures, when an edge of the light blocking element is above and the light through hole is below, a point where a contour slope of each of the light diminishing structures changes from negative to positive is one of the at least three nodes. Two of the at least three nodes adjacent to each other form a connection line, two of the connection lines adjacent to each other form a deflection angle, and the deflection angle is θ, the following condition is satisfied: 0 degrees ≤ θ ≤ 20 degrees. Hence, the design of the light diminishing structures can be adjusted according to the requirements of the imaging lens assembly so as to provide the appropriate imaging effect of the imaging lens assembly. In detail, two sides of the light diminishing structures connect to the sidelines.

When a length of each of the sidelines is TL, and a straight segment length of each of the sidelines is D, the following condition is satisfied: 0.05 < D/TL < 0.95. The appropriate imaging effect of the imaging lens assembly is provided by adjusting the ratio of the straight segment and the light diminishing structures. Moreover, the following condition is satisfied: 0 ≤ D/TL ≤ 0.05.

The polygonal contour can be a regular polygon. Hence, the imaging quality of the imaging lens assembly can be improved.

The light through hole of the light blocking element is configured to define an f-number of the imaging lens assembly. Hence, the imaging quality of the imaging lens assembly can be improved.

The imaging lens assembly can further include an anti-reflection layer, wherein the anti-reflection layer is disposed on an outer surface of the light blocking element. Hence, a stray light reflects on the outer surface of the light blocking element can be reduced. In detail, the anti-reflection layer can be a multi-layer anti-reflection layer formed by stacking a plurality of high-refractive index layers and a plurality of low-refractive index layers. The anti-reflection layer can also be a moth-eye anti-reflective structure layer with graded refractive index, but is not limited thereto.

When a thickness of the light blocking element along the optical axis is T, the following condition is satisfied: 2 $\mu$m ≤ T ≤ 88 $\mu$m. By reducing the thickness of the light blocking element, the stray light can be prevented from being reflected on a wall of the light through hole. In detail, the light blocking element can be made of a plastic material, and use a coating layer coats the two surfaces of the base layer of the light blocking element, wherein the material of the base layer can be polyimide (PI) or polyethylene terephthalate (PET). Or, the light blocking element can also be made of a single-layer metal material, and the black pigment can be disposed on the surface of the metal layer, wherein the material of the metal base layer can be free machining brass or copper alloy, but is not limited thereto. Further, the properties of the wall of the light through hole can be changed through chemical corrosion or chamfering process to prevent the stray light reflecting through the wall of the light through hole and affecting the imaging quality.

When the number of the sidelines is N, the following condition is satisfied: 5 ≤ N ≤ 12. In detail, the number of the sidelines can be adjusted according to the imaging requirements, so that the imaging lens assembly can obtain different imaging effects.

When each of the connection lines is parallel to each of the sidelines, a length of each of the connection lines is W, and a vertical distance from a midpoint of each of the connection lines to the edge of the light blocking element is H, the following condition is satisfied: 0.04 ≤ H/W ≤ 0.7. The diffraction pattern of light can be moderately changed through the appropriate aspect ratio of the light diminishing structures.

When a vertical distance from the midpoint of each of the connection lines to the edge of the light blocking element is H, the following condition is satisfied: 5 $\mu$m ≤ H ≤ 120 $\mu$m. The diffraction pattern of light can be moderately changed through the appropriate depth of the light diminishing structures.

When the f-number of the imaging lens assembly is FNO, the following condition is satisfied: 0.65 ≤ FNO ≤ 1.8. Hence, the imaging quality of the imaging lens assembly can be improved.

Each of the aforementioned technical features of the imaging lens assembly can be combined with each other and reach the corresponded effect.

The present disclosure provides an electronic device includes the imaging lens assembly of the aforementioned aspects.

According to the aforementioned embodiments, the following specific embodiments, methods and the corresponded figures are provided for further explanation.

<1st embodiment>

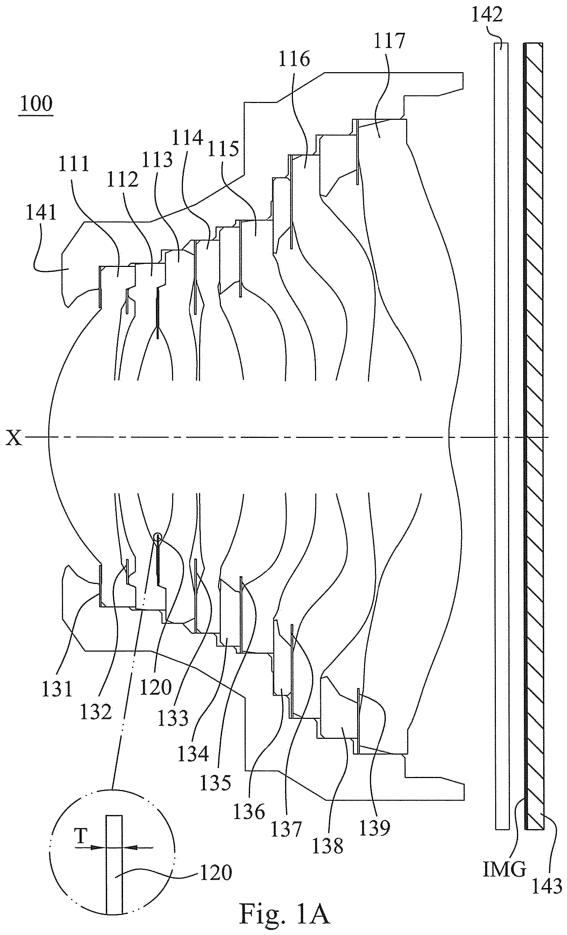

Fig. 1A is a schematic view of an imaging lens assembly 100 according to the 1st embodiment of the present disclosure. In Fig. 1A, the imaging lens assembly 100 includes a plurality of lens elements 111, 112, 113, 114, 115, 116, 117, a light blocking element 120, a plurality of light blocking sheets 131, 132, 133, 135, 137, 139, a plurality of spacers 134, 136, 138, a lens barrel 141, a filter 142 and an image sensor 143, wherein the lens elements 111, 112, 113, 114, 115, 116, 117 are configured to define an optical axis X. The optical axis X passes through the lens elements 111, 112, 113, 114, 115, 116, 117, and the image sensor 143 is disposed on an image surface IMG.

In detail, the imaging lens assembly 100 includes, in order from an object side to an image side along the optical axis X, the light blocking sheet 131, the lens element 111, the light blocking sheet 132, the lens element 112, the light blocking element 120, the lens element 113, the light blocking sheet 133, the lens element 114, the spacer 134, the light blocking sheet 135, the lens element 115, the spacer 136, the light blocking sheet 137, the lens element 116, the spacer 138, the light blocking sheet 139, the lens element 117, the filter 142, wherein the lens elements 111, 112, 113, 114, 115, 116, 117, the light blocking element 120, the light blocking sheets 131, 132, 133, 135, 137, 139, and the spacers 134, 136, 138 are disposed in the lens barrel 141, and the filter 142 is disposed on the image side of the lens barrel 141. It should be noted that, the optical characteristics of the lens elements and other optical elements such as a number, a structure, a surface shape and so on can be utilized according to different imaging requirements, but the present disclosure is not limited thereto. In the 1st embodiment, the light blocking element 120 is the light blocking sheet.

Further, the imaging lens assembly 100 can further include an anti-reflection layer (its reference numeral is omitted), wherein the anti-reflection layer is disposed on an outer surface of the light blocking element 120 so as to reduce the reflection of a stray light on the outer surface of the light blocking element 120. In detail, the anti-reflection layer can be a multi-layer anti-reflection layer formed by stacking a plurality of high-refractive index layers and a plurality of low-refractive index layers. The anti-reflection layer can also be a moth-eye anti-reflective structure layer with graded refractive index, but is not limited thereto.

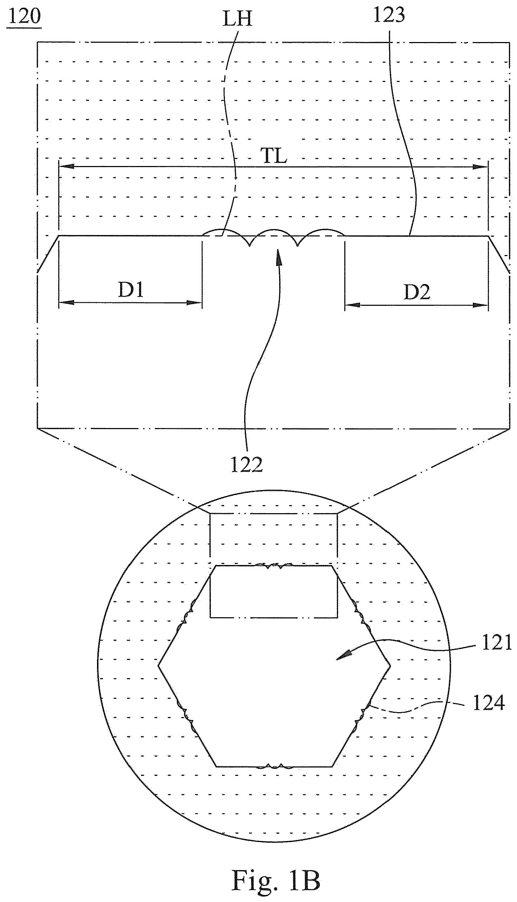

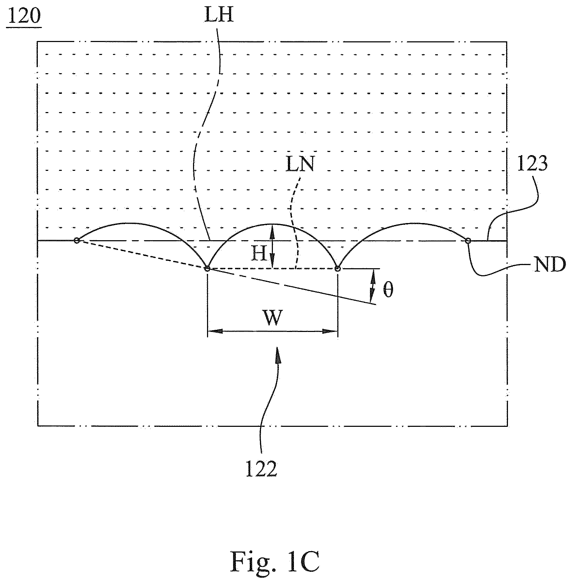

Fig. 1B is the schematic view of a light blocking element 120 according to the 1st example of the 1st embodiment of Fig. 1A. Fig. 1C is a partial enlarged view of the light blocking element 120 according to the 1st example of the 1st embodiment of Fig. 1B. In Fig. 1B and Fig. 1C, the light blocking element 120 includes a light through hole 121 and a plurality of light diminishing structures 122. The optical axis X passes through the light through hole 121, the light through hole 121 is formed by connecting a plurality of sidelines 123 to define a polygonal contour 124, and the light diminishing structures 122 are regularly disposed along the polygonal contour 124. The light diminishing structures 122 are configured to undulate at least one portion of each of the sidelines 123, so that the at least one portion of each of the sidelines 123 is a non-straight line. The imaging effect of the imaging lens assembly 100 can be changed through the light through hole 121 which is polygonal-shaped. At the same time, the light diminishing structures 122 are further disposed along the polygonal contour 124 to undulate each of the sidelines 123 so as to moderately change the diffraction pattern of the light, and the appropriate imaging effect of the imaging lens assembly 100 is provided by adjusting the ratio of the straight segment and the light diminishing structures 122.

In detail, when each of the sidelines 123 is undulate, the light diminishing structure 122 is formed, and one unit of the light diminishing structure 122 is between two straight line segments, and the polygonal contour 124 is a regular polygon to improve the imaging quality of the imaging lens assembly 100.

Further, the light through hole 121 of the light blocking element 120 is configured to define an f-number of the imaging lens assembly 100 to improve the imaging quality of the imaging lens assembly 100, wherein the f-number FNO of the imaging lens assembly 100 is 1.4, and the thickness T of the light blocking element 120 along the optical axis X is 16 $\mu$m.

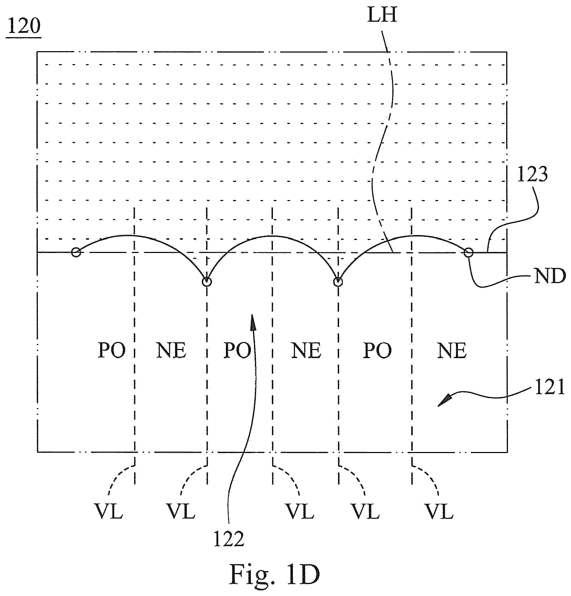

Fig. 1D is another partial enlarged view of the light blocking element 120 according to the 1st example of the 1st embodiment of Fig. 1B. In Fig. 1C and Fig. 1D, each of the light diminishing structures 122 includes four nodes ND. The nodes ND satisfy any one of the following two definitions, wherein one of the definitions is each of two sides of each of the light diminishing structures 122 is one of the nodes ND, and the other one of the definitions is define a horizontal baseline LH by a virtual connection line of the two sides of each of the light diminishing structures 122, when an edge of the light blocking element 120 is above and the light through hole 121 is below, a point where a contour slope of each of the light diminishing structures 122 changes from negative to positive is one of the nodes ND. Hence, the design of the light diminishing structures 122 can be adjusted according to the requirements of the imaging lens assembly 100 so as to provide the appropriate imaging effect of the imaging lens assembly 100. In detail, two sides of the light diminishing structures 122 connect to the sidelines 123.

In Fig. 1D, the slope change between the nodes ND is divided by a virtual line VL, wherein the positive region PO of the light diminishing structures 122 represents the contour slope is positive, and the negative region NE of the light diminishing structures 122 represents the contour slope is negative. It should be noted that, the horizontal line in the light diminishing structures 122 indicates that the contour slope is 0.

In Fig. 1B and Fig. 1C, the number of the sidelines 123 is N, the length of each of the sidelines 123 is TL; the straight segment length of each of the sidelines 123 is D (its reference numeral is omitted), wherein the straight segment length D of each sidelines 123 is the sum of the segment lengths of each sidelines 123 minus the light diminishing structures 122. The segment lengths of each sidelines 123 minus the light diminishing structures 122 are D1 and D2 respectively, that is, D = D1+D2; two of the nodes ND adjacent to each other form a connection line LN, two of the connection lines LN adjacent to each other form a deflection angle $\theta$; when each of the connection lines LN is parallel to each of the sidelines 123, the length of each of the connection lines LN is W, the vertical distance from a midpoint of each of the connection lines LN to the edge of the light blocking element 120 is H, the conditions related to the parameters can be satisfied as the following Table 1A.

| Table 1A | | | |
|---|---|---|---|
| N | 6 | D2 (mm) | 0.5 |

(continued)

| Table 1A | | | |
|---|---|---|---|
| TL (mm) | 1.5 | W (μm) | 166.7 |
| D (mm) | 1 | H (μm) | 56.8 |
| D/TL | 0.67 | H/W | 0.34 |
| D1 (mm) | 0.5 | θ (degrees) | 12 |

It should be noted that, only schematically marked part of the connection lines LN in Fig. 1C.

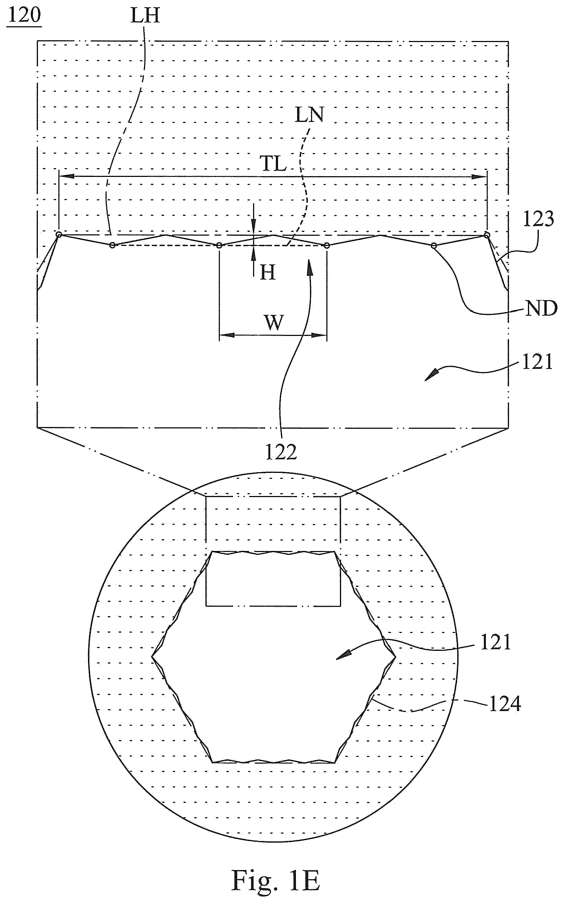

Fig. 1E is the schematic view of a light blocking element 120 according to the 2nd example of the 1st embodiment of Fig. 1A. In Fig. 1E, the light diminishing structures 122 are configured to undulate each of the sidelines 123, so that the whole of each of the sidelines 123 is the non-straight line, wherein two sides of the light diminishing structures 122 connect to the sidelines 123, and whole of each of the sidelines 123 is undulated by the light diminishing structures 122.

In detail, when each of the sidelines 123 is undulate, the light diminishing structure 122 is formed, and the polygonal contour 124 is a regular polygon to improve the imaging quality of the imaging lens assembly 100.

In the 2nd example of the 1st embodiment, each of the light diminishing structures 122 includes six nodes ND, the number of the sidelines 123 is N; the length of each of the sidelines 123 is TL; the straight segment length of each of the sidelines 123 is D; two of the nodes ND adjacent to each other form a connection line LN, two of the connection lines LN adjacent to each other form a deflection angle θ (its reference numeral is omitted); when each of the connection lines LN is parallel to each of the sidelines 123, the length of each of the connection lines LN is W, the vertical distance from a midpoint of each of the connection lines LN to the edge of the light blocking element 120 is H, the conditions related to the parameters can be satisfied as the following Table 1B.

| Table 1B | | | |
|---|---|---|---|
| N | 6 | W (μm) | 375 |
| TL (mm) | 1.5 | H (μm) | 36.5 |
| D (mm) | 0 | H/W | 0.1 |
| D/TL | 0 | θ (degrees) | 0 |

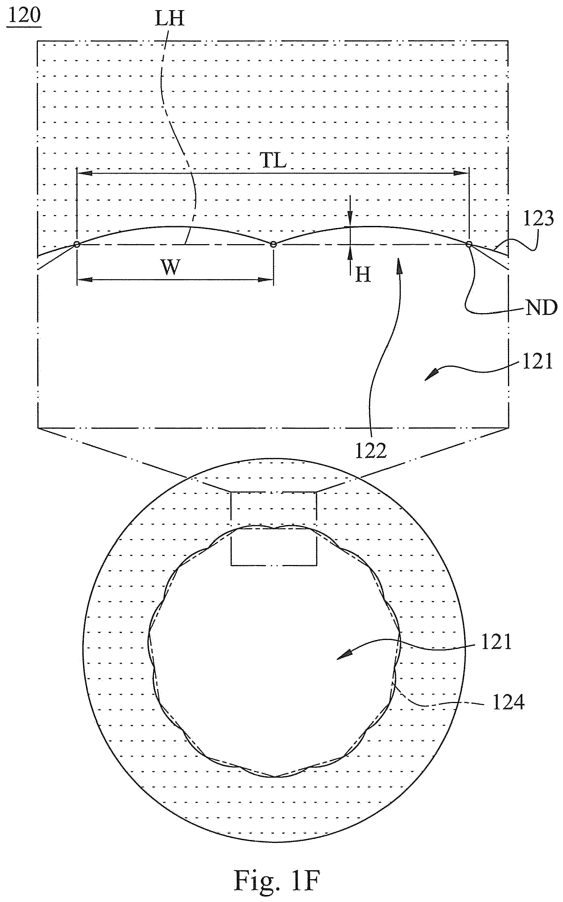

Fig. 1F is the schematic view of a light blocking element 120 according to the 3rd example of the 1st embodiment of Fig. 1A. In Fig. 1F, the light diminishing structures 122 are configured to undulate each of the sidelines 123, so that the whole of each of the sidelines 123 is the non-straight line, wherein two sides of the light diminishing structures 122 connects to the sidelines 123, and whole of each of the sidelines 123 is undulated by the light diminishing structures 122.

In detail, when each of the sidelines 123 is undulate, the light diminishing structure 122 is formed.

In the 3rd example of the 1st embodiment, each of the light diminishing structures 122 includes three nodes ND, the number of the sidelines 123 is N; the length of each of the sidelines 123 is TL; the straight segment length of each of the sidelines 123 is D; two of the nodes ND adjacent to each other form a connection line (its reference numeral is omitted), two of the connection lines adjacent to each other form a deflection angle θ (its reference numeral is omitted), wherein the connection lines overlap with the horizontal baseline LH; when each of the connection lines is parallel to each of the sidelines 123, the length of each of the connection lines is W, the vertical distance from a midpoint of each of the connection lines to the edge of the light blocking element 120 is H, the conditions related to the parameters can be satisfied as the following Table 1C.

| Table 1C | | | |
|---|---|---|---|
| N | 11 | W (μm) | 422.5 |
| TL (mm) | 0.845 | H (μm) | 38.3 |
| D (mm) | 0 | H/W | 0.09 |
| D/TL | 0 | θ (degrees) | 0 |

<2nd embodiment>

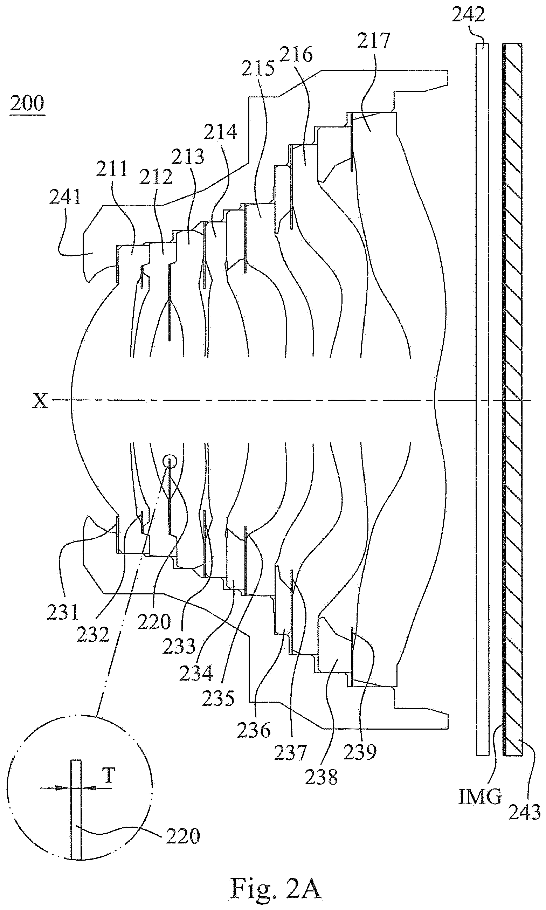

Fig. 2A is a schematic view of an imaging lens assembly 200 according to the 2nd embodiment of the present disclosure. In Fig. 2A, the imaging lens assembly 200 includes a plurality of lens elements 211, 212, 213, 214, 215, 216, 217, a light blocking element 220, a plurality of light blocking sheets 231, 232, 233, 235, 237, 239, a plurality of spacers 234, 236, 238, a lens barrel 241, a filter 242 and an image sensor 243, wherein the lens elements 211, 212, 213, 214, 215, 216, 217 are configured to define an optical axis X. The optical axis X passes through the lens elements 211, 212, 213, 214, 215, 216, 217, and the image sensor 243 is disposed on an image surface IMG.

In detail, the imaging lens assembly 200 includes, in order from an object side to an image side along the optical axis X, the light blocking sheet 231, the lens element 211, the light blocking sheet 232, the lens element 212, the light blocking element 220, the lens element 213, the light blocking sheet 233, the lens element 214, the spacer 234, the light blocking sheet 235, the lens element 215, the spacer 236, the light blocking sheet 237, the lens element 216, the spacer 238, the light blocking sheet 239, the lens element 217, the filter 242, wherein the lens elements 211, 212, 213, 214, 215, 216, 217, the light blocking element 220, the light blocking sheets 231, 232, 233, 235, 237, 239, and the spacers 234, 236, 238 are disposed in the lens barrel 241, and the filter 242 is disposed on the image side of the lens barrel 241. It should be noted that, the optical characteristics of the lens elements and other optical elements such as a number, a structure, a surface shape and so on can be utilized according to different imaging requirements, but the present disclosure is not limited thereto. In the 2nd embodiment, the light blocking element 220 is the light blocking sheet.

Further, the imaging lens assembly 200 can further include an anti-reflection layer (its reference numeral is omitted), wherein the anti-reflection layer is disposed on an outer surface of the light blocking element 220 so as to reduce the reflection of a stray light on the outer surface of the light blocking element 220.

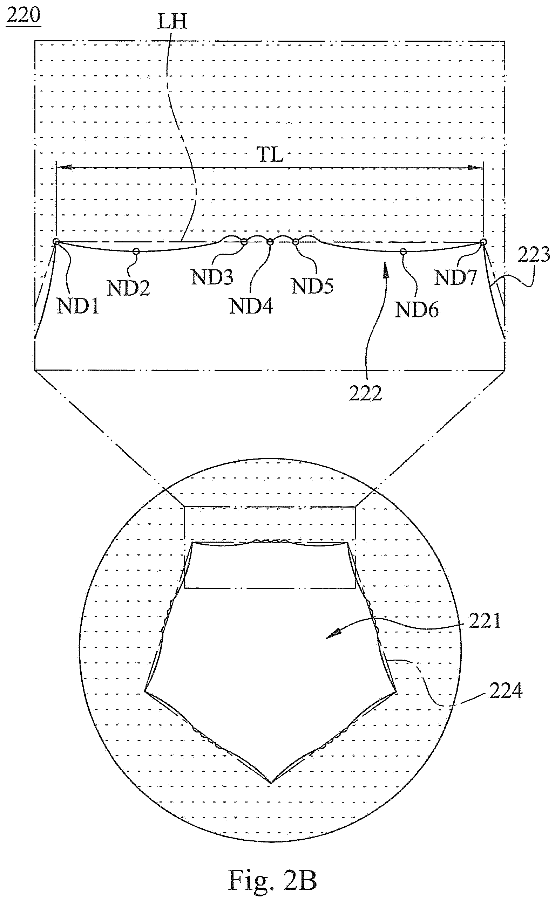

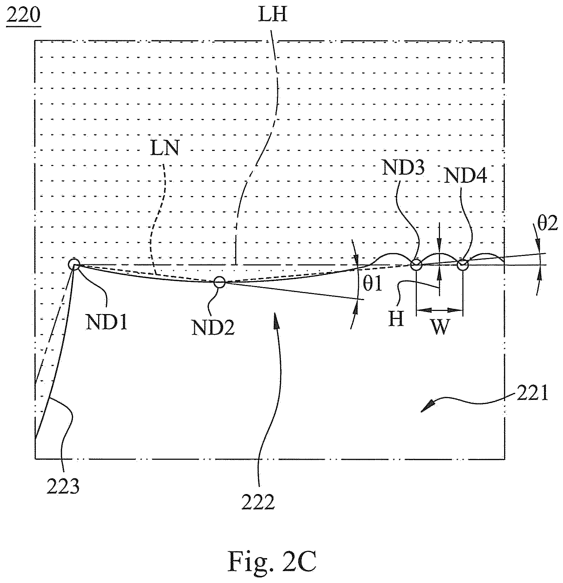

Fig. 2B is the schematic view of a light blocking element 220 according to the 1st example of the 2nd embodiment of Fig. 2A. Fig. 2C is a partial enlarged view of the light blocking element 220 according to the 1st example of the 2nd embodiment of Fig. 2B. In Fig. 2B and Fig. 2C, the light blocking element 220 includes a light through hole 221 and a plurality of light diminishing structures 222. The optical axis X passes through the light through hole 221, the light through hole 221 is formed by connecting a plurality of sidelines 223 to define a polygonal contour 224, and the light diminishing structures 222 are regularly disposed along the polygonal contour 224. The light diminishing structures 222 are configured to undulate each of the sidelines 223, so that the whole of each of the sidelines 223 is the non-straight line, wherein two sides of the light diminishing structures 222 connect to the sidelines 223, and whole of each of the sidelines 223 is undulated by the light diminishing structures 222.

The imaging effect of the imaging lens assembly 200 can be changed through the light through hole 221 which is polygonal-shaped. At the same time, the light diminishing structures 222 are further disposed along the polygonal contour 224 to undulate each of the sidelines 223 so as to moderately change the diffraction pattern of the light. In detail, when each of the sidelines 223 is undulate, the light diminishing structure 222 is formed, and the polygonal contour 224 is a regular polygon to improve the imaging quality of the imaging lens assembly 200.

Further, the light through hole 221 of the light blocking element 220 is configured to define an f-number of the imaging lens assembly 200 to improve the imaging quality of the imaging lens assembly 200, wherein the f-number FNO of the imaging lens assembly 200 is 4.0, and the thickness T of the light blocking element 220 along the optical axis X is 33 $\mu$m.

Each of the light diminishing structures 222 includes seven nodes ND1, ND2, ND3, ND4, ND5, ND6, ND7, wherein the nodes ND1, ND7 are respectively located on the two sides of each of the light diminishing structures 222. A horizontal baseline LH is defined by a virtual connection line of the two sides of each of the light diminishing structures 222, when an edge of the light blocking element 220 is above and the light through hole 221 is below, points where a contour slope of each of the light diminishing structures 222 change from negative to positive are the nodes ND2, ND3, ND4, ND5, ND6. Hence, the design of the light diminishing structures 222 can be adjusted according to the requirements of the imaging lens assembly 200 so as to provide the appropriate imaging effect of the imaging lens assembly 200. In detail, two sides of the light diminishing structures 222 connect to the sidelines 223.

In the 1st example of the 2nd embodiment, when the number of the sidelines 223 is N; the length of each of the sidelines 223 is TL; the straight segment length of each of the sidelines 223 is D; two of the nodes ND1, ND2, ND3, ND4, ND5, ND6, ND7 adjacent to each other form a connection line LN, and two of the connection lines LN adjacent to each other form a deflection angle $\theta$ (its reference numeral is omitted), the following condition is satisfied: 0 degrees $\leq \theta \leq$ 20 degrees. In Fig. 2C, take the connection line LN between the node ND1 and the node ND2, the connection line LN between the node ND2 and the node ND3, and the connection line LN between the node ND3 and the node ND4 for signifying, wherein the deflection angle between the connection line LN formed by the nodes ND1, ND2 and the connection line LN formed by the nodes ND2, ND3 is $\theta$1, and the deflection angle between the connection line LN formed by the nodes ND2, ND3 and the connection line LN formed by the nodes ND3, ND4 deflection angle is $\theta$2; when each of the connection lines LN is parallel to each of the sidelines 223, the length of each of the connection lines LN is W, the vertical distance from a midpoint of each of the connection lines LN to the edge of the light blocking element 220 is H, the conditions related to the parameters can be satisfied as the following Table 2A.

| Table 2A | | | |
|---|---|---|---|
| N | 5 | H ($\mu$m) | 17.2 |
| TL (mm) | 1.18 | H/W | 0.25 |
| D (mm) | 0 | $\theta$1 (degrees) | 11.9 |
| D/TL | 0 | $\theta$2 (degrees) | 5.1 |
| W ($\mu$m) | 70 | | |

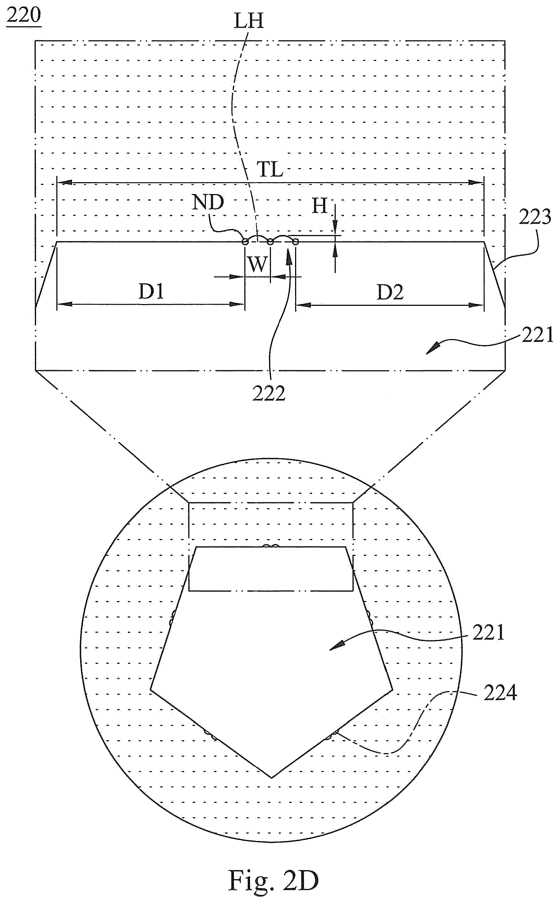

Fig. 2D is the schematic view of a light blocking element 220 according to the 2nd example of the 2nd embodiment of Fig. 2A. In Fig. 2D, the light diminishing structures 222 are configured to undulate at least one portion of each of the sidelines 223, so that the at least one portion of each of the sidelines 223 is a non-straight line. The appropriate imaging effect of the imaging lens assembly 200 is provided by adjusting the ratio of the straight segment and the light diminishing structures 222.

In detail, when each of the sidelines 223 is undulate, the light diminishing structure 222 is formed, and one unit of the light diminishing structure 222 is between two straight line segments.

In the 2nd example of the 2nd embodiment, each of the light diminishing structures 222 includes three nodes ND, the number of the sidelines 223 is N; the length of each of the sidelines 223 is TL; the straight segment length of each of the sidelines 223 is D (its reference numeral is omitted); wherein the straight segment length D of each sidelines 223 is the sum of the segment lengths of each sidelines 223 minus the light diminishing structures 222. The segment lengths of each sidelines 223 minus the light diminishing structures 222 are D1 and D2 respectively, that is, D = D1+D2; two of the nodes ND adjacent to each other form a connection line (its reference numeral is omitted), two of the connection lines adjacent to each other form a deflection angle $\theta$ (its reference numeral is omitted), wherein the connection lines overlap with the horizontal baseline LH; when each of the connection lines is parallel to each of the sidelines 223, the length of each of the connection lines is W, the vertical distance from a midpoint of each of the connection lines to the edge of the light blocking element 220 is H, the conditions related to the parameters can be satisfied as the following Table 2B.

| Table 2B | | | |
|---|---|---|---|
| N | 5 | D2 (mm) | 0.52 |
| TL (mm) | 1.18 | W ($\mu$m) | 70 |
| D (mm) | 1.04 | H ($\mu$m) | 17.2 |
| D/TL | 0.88 | H/W | 0.25 |
| D1 (mm) | 0.52 | $\theta$ (degrees) | 0 |

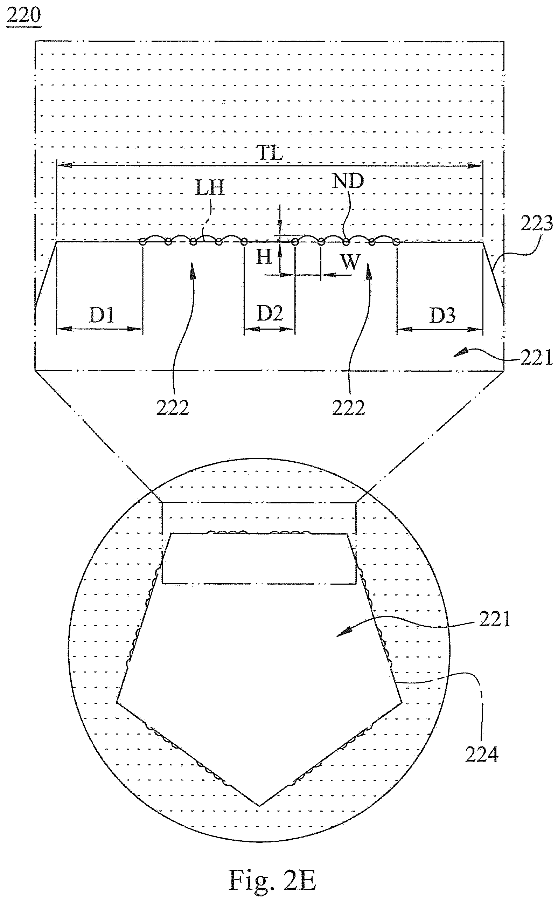

Fig. 2E is the schematic view of a light blocking element 220 according to the 3rd example of the 2nd embodiment of Fig. 2A. In Fig. 2E, the light diminishing structures 222 are configured to undulate two portions of each of the sidelines 223, so that the two portions of each of the sidelines 223 are a non-straight line. The appropriate imaging effect of the imaging lens assembly 200 is provided by adjusting the ratio of the straight segment and the light diminishing structures 222.

In detail, when each of the sidelines 223 is undulate, the light diminishing structure 222 is formed, and one unit of the light diminishing structure 222 is between two straight line segments.

In the 3rd example of the 2nd embodiment, each of the light diminishing structures 222 includes five nodes ND, the number of the sidelines 223 is N; the length of each of the sidelines 223 is TL; the straight segment length of each of the sidelines 223 is D (its reference numeral is omitted); wherein the straight segment length D of each sidelines 223 is the sum of the segment lengths of each sidelines 223 minus the light diminishing structures 222, and the segment lengths of each sidelines 223 minus the light diminishing structures 222 are D1, D2 and D3 respectively, that is, D = D1+D2+D3; two of the nodes ND adjacent to each other form a connection line (its reference numeral is omitted), two of the connection lines adjacent to each other form a deflection angle $\theta$ (its reference numeral is omitted), wherein the connection lines overlap with the horizontal baseline LH; when each of the connection lines is parallel to each of the sidelines 223, the length of each of the connection lines is W, the vertical distance from a midpoint of each of the connection lines to the edge of the light blocking element 220 is H, the conditions related to the parameters can be satisfied as the following Table 2C.

| Table 2C | | | |
|---|---|---|---|
| N | 5 | D3 (mm) | 0.24 |
| TL (mm) | 1.18 | W ($\mu$m) | 70 |
| D (mm) | 0.62 | H ($\mu$m) | 17.2 |
| D/TL | 0.53 | H/W | 0.25 |
| D1 (mm) | 0.24 | $\theta$ (degrees) | 0 |
| D2 (mm) | 0.14 | | |

<3rd embodiment>

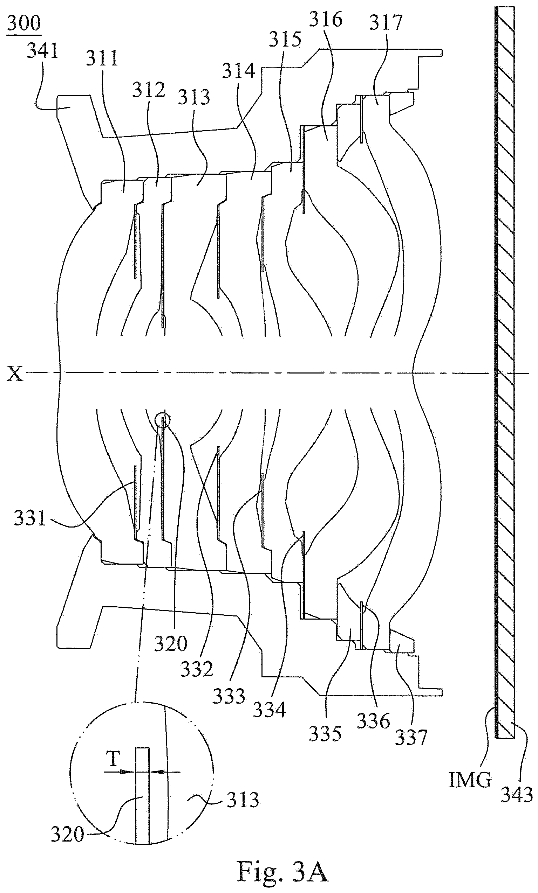

Fig. 3A is a schematic view of an imaging lens assembly 300 according to the 3rd embodiment of the present disclosure. In Fig. 3A, the imaging lens assembly 300 includes a plurality of lens elements 311, 312, 313, 314, 315, 316, 317, a light blocking element 320, a plurality of light blocking sheets 331, 332, 333, 334, 336, a spacer 335, a retainer 337, a lens barrel 341 and an image sensor 343, wherein the lens elements 311, 312, 313, 314, 315, 316, 317 are configured to define an optical axis X. The optical axis X passes through the lens elements 311, 312, 313, 314, 315, 316, 317, and the image sensor 343 is disposed on an image surface IMG.

In detail, the imaging lens assembly 300 includes, in order from an object side to an image side along the optical axis X, the lens element 311, the light blocking sheet 331, the lens element 312, the light blocking element 320, the lens element 313, the light blocking sheet 332, the lens element 314, the light blocking sheet 333, the lens element 315, the light blocking sheet 334, the lens element 316, the spacer 335, the light blocking sheet 336, the lens element 317, the retainer 337, wherein the lens elements 311, 312, 313, 314, 315, 316, 317, the light blocking element 320, the light blocking sheets 331, 332, 333, 334, 336, and the spacer 335 and the retainer 337 are disposed in the lens barrel 341. It should be noted that, the optical characteristics of the lens elements and other optical elements such as a number, a structure, a surface shape and so on can be utilized according to different imaging requirements, but the present disclosure is not limited thereto. In the 3rd embodiment, the light blocking element 320 is the light blocking sheet.

Further, the imaging lens assembly 300 can further include an anti-reflection layer (its reference numeral is omitted), wherein the anti-reflection layer is disposed on an outer surface of the light blocking element 320 so as to reduce the reflection of a stray light on the outer surface of the light blocking element 320.

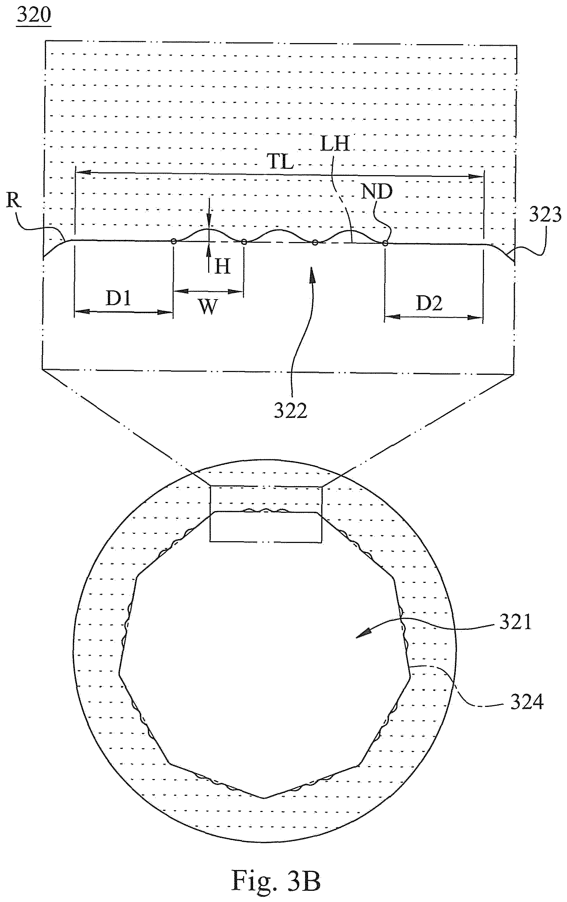

Fig. 3B is the schematic view of a light blocking element 320 according to the 1st example of the 3rd embodiment of Fig. 3A. In Fig. 3B, the light blocking element 320 includes a light through hole 321 and a plurality of light diminishing structures 322. The optical axis X passes through the light through hole 321, the light through hole 321 is formed by connecting a plurality of sidelines 323 to define a polygonal contour 324, and the light diminishing structures 322 are regularly disposed along the polygonal contour 324. The light diminishing structures 322 are configured to undulate at least one portion of each of the sidelines 323, so that the at least one portion of each of the sidelines 323 is a non-straight line. The imaging effect of the imaging lens assembly 300 can be changed through the light through hole 321 which is polygonal-shaped. At the same time, the light diminishing structures 322 are further disposed along the polygonal contour 324 to undulate each of the sidelines 323 so as to moderately change the diffraction pattern of the light, and the appropriate imaging effect of the imaging lens assembly 300 is provided by adjusting the ratio of the straight segment and the light diminishing structures 322.

In detail, when each of the sidelines 323 is undulate, the light diminishing structure 322 is formed, one unit of the light diminishing structure 322 is between two straight line segments, and the polygonal contour 324 is a regular polygon to improve the imaging quality of the imaging lens assembly 300.

The sidelines 323 can be connected with a fillet R, but is not limited thereto. In detail, the properties of the wall of the light through hole 321 can be changed through chemical corrosion or chamfering process to prevent the stray light reflecting through the wall of the light through hole 321 and affecting the imaging quality.

Further, the light through hole 321 of the light blocking element 320 is configured to define an f-number of the imaging lens assembly 300 to improve the imaging quality of the imaging lens assembly 300, wherein the f-number FNO of the imaging lens assembly 300 is 2.2, and the thickness T of the light blocking element 320 along the optical axis X is 23 $\mu$m.

Each of the light diminishing structures 322 includes four nodes ND. The nodes ND satisfy any one of the following two definitions, wherein one of the definitions is each of two sides of each of the light diminishing structures 322 is one of the nodes ND, and the other one of the definitions is define a horizontal baseline LH by a virtual connection line of the two sides of each of the light diminishing structures 322, when an edge of the light blocking element 320 is above and the light through hole 321 is below, a point where a contour slope of each of the light diminishing structures 322 changes from negative to positive is one of the nodes ND. Hence, the design of the light diminishing structures 322 can be adjusted according to the requirements of the imaging lens assembly 300 so as to provide the appropriate imaging effect of the imaging lens assembly 300. In detail, two sides of the light diminishing structures 322 connect to the sidelines 323.

In the 1st example of the 3rd embodiment, when the number of the sidelines 323 is N; the length of each of the sidelines 323 is TL, and the straight segment length of each of the sidelines 323 is D (its reference numeral is omitted); wherein the straight segment length D of each sidelines 323 is the sum of the segment lengths of each sidelines 323 minus the light diminishing structures 322, and the segment lengths of each sidelines 323 minus the light diminishing structures 322 are D1 and D2 respectively, that is, D = D1+D2; two of the nodes ND adjacent to each other form a connection line (its reference numeral is omitted), two of the connection lines adjacent to each other form a deflection angle θ (its reference numeral is omitted), wherein the connection lines overlap with the horizontal baseline LH; when each of the connection lines is parallel to each of the sidelines 323, the length of each of the connection lines is W, the vertical distance from a midpoint of each of the connection lines to the edge of the light blocking element 320 is H, the conditions related to the parameters can be satisfied as the following Table 3A.

| Table 3A | | | |
|---|---|---|---|
| N | 9 | D2 (mm) | 0.12 |
| TL (mm) | 0.5 | W (μm) | 86.6 |
| D (mm) | 0.24 | H (μm) | 15 |
| D/TL | 0.48 | H/W | 0.17 |
| D1 (mm) | 0.12 | θ (degrees) | 0 |

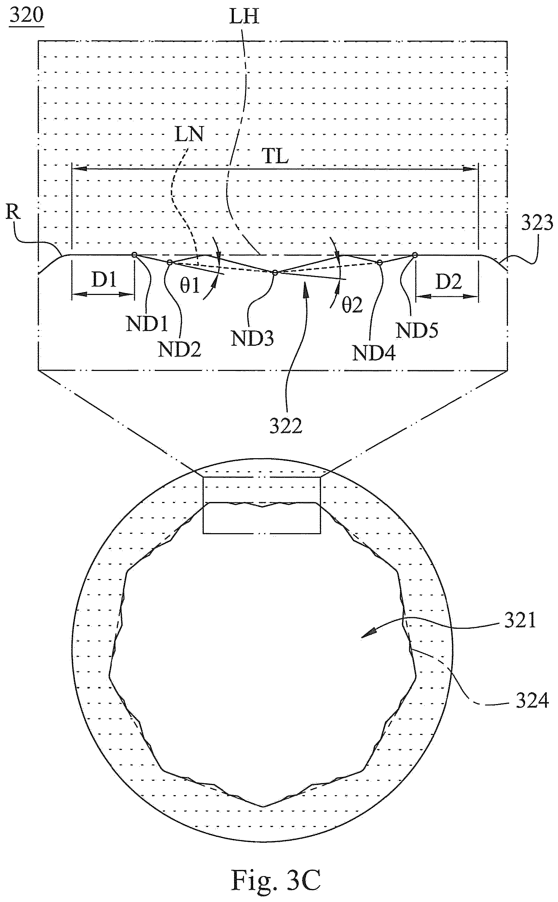

Fig. 3C is the schematic view of a light blocking element 320 according to the 2nd example of the 3rd embodiment of Fig. 3A. In Fig. 3C, the light diminishing structures 322 are configured to undulate at least one portion of each of the sidelines 323, so that the at least one portion of each of the sidelines 323 is a non-straight line. The appropriate imaging effect of the imaging lens assembly 300 is provided by adjusting the ratio of the straight segment and the light diminishing structures 322.

In detail, when each of the sidelines 323 is undulate, the light diminishing structure 322 is formed, one unit of the light diminishing structure 322 is between two straight line segments.

In the 2nd example of the 3rd embodiment, each of the light diminishing structures 322 includes five nodes ND1, ND2, ND3, ND4, ND5, the number of the sidelines 323 is N; the length of each of the sidelines 323 is TL; the straight segment length of each of the sidelines 323 is D (its reference numeral is omitted); wherein the straight segment length D of each sidelines 323 is the sum of the segment lengths of each sidelines 323 minus the light diminishing structures 322, and the segment lengths of each sidelines 323 minus the light diminishing structures 322 are D1 and D2 respectively, that is, D = D1+D2; when two of the nodes ND1, ND2, ND3, ND4, ND5 adjacent to each other form a connection line LN, and two of the connection lines LN adjacent to each other form a deflection angle θ (its reference numeral is omitted), the following condition is satisfied: 0 degrees ≤ θ ≤ 20 degrees. In Fig. 3C, take the connection line LN between the node ND1 and the node ND2, the connection line LN between the node ND2 and the node ND3, and the connection line LN between the node ND3 and the node ND4 for signifying, wherein the deflection angle between the connection line LN formed by the nodes ND1, ND2 and the connection line LN formed by the nodes ND2, ND3 is θ1, and the deflection angle between the connection line LN formed by the nodes ND2, ND3 and the connection line LN formed by the nodes ND3, ND4 deflection angle is θ2, the conditions related to the parameters can be satisfied as the following Table 3B.

| Table 3B | | | |
|---|---|---|---|
| N | 9 | D1 (mm) | 0.08 |
| TL (mm) | 0.5 | D2 (mm) | 0.08 |
| D (mm) | 0.16 | θ1 (degrees) | 6.8 |
| D/TL | 0.32 | θ2 (degrees) | 10.9 |

<4th embodiment>

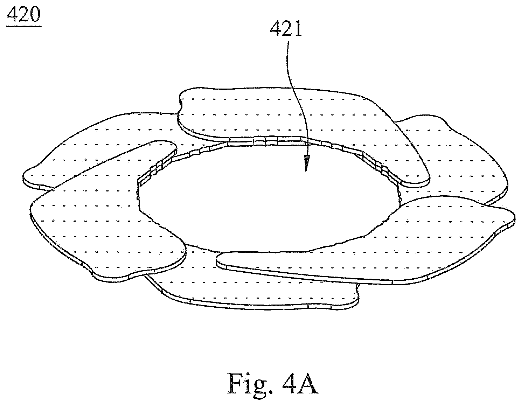

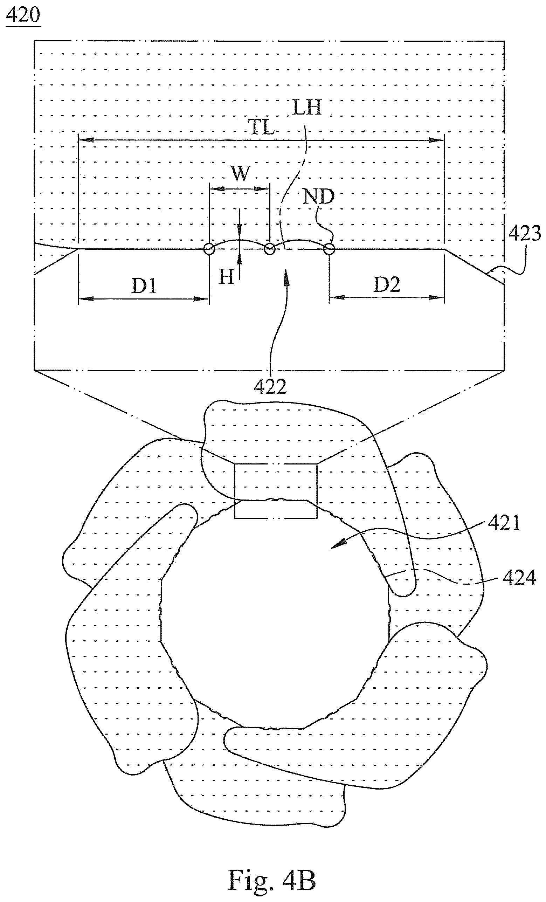

Fig. 4A is a three-dimensional view of a light blocking element 420 according to the 1st example of the 4th embodiment of the present disclosure not forming part of the claimed invention. Fig. 4B is the schematic view of the light blocking element 420 according to the 1st example of the 4th embodiment of Fig. 4A. In Fig. 4A and Fig. 4B, the light blocking element 420 includes a light through hole 421 and a plurality of light diminishing structures 422. The optical axis (its reference numeral is omitted) passes through the light through hole 421, the light through hole 421 is formed by connecting a plurality of sidelines 423 to define a polygonal contour 424, and the light diminishing structures 422 are regularly disposed along the polygonal contour 424. The light diminishing structures 422 are configured to undulate at least one portion of each of the sidelines 423, so that the at least one portion of each of the sidelines 423 is a non-straight line.

In detail, the light blocking element 420 can be applied to an imaging lens assembly (its reference numeral is omitted). The imaging effect of the imaging lens assembly can be changed through the light through hole 421 which is polygonal-shaped, the light diminishing structures 422 are further disposed along the polygonal contour 424 to undulate each of the sidelines 423 so as to moderately change the diffraction pattern of the light, and the appropriate imaging effect of the imaging lens assembly is provided by adjusting the ratio of the straight segment and the light diminishing structures 422. In the 1st example of the 4th embodiment, the light blocking element 420 can be an assembly of multiple parts, such as a variable aperture composed of six light blocking sheets (its reference numeral is omitted).

In detail, when each of the sidelines 423 is undulate, the light diminishing structure 422 is formed, and one unit of the light diminishing structure 422 is between two straight line segments, and the polygonal contour 424 is a regular polygon to improve the imaging quality of the imaging lens assembly.

Further, the light through hole 421 of the light blocking element 420 is configured to define an f-number of the imaging lens assembly to improve the imaging quality of the imaging lens assembly, wherein the thickness T of the light blocking element 420 along the optical axis (its reference numeral is omitted) is 80 $\mu$m.

Each of the light diminishing structures 422 includes three nodes ND. The nodes ND satisfy any one of the following two definitions, wherein one of the definitions is each of two sides of each of the light diminishing structures 422 is one of the nodes ND, and the other one of the definitions is define a horizontal baseline LH by a virtual connection line of the two sides of each of the light diminishing structures 422, when an edge of the light blocking element 420 is above and the light through hole 421 is below, a point where a contour slope of each of the light diminishing structures 422 changes from negative to positive is one of the nodes ND. Hence, the design of the light diminishing structures 422 can be adjusted according to the requirements of the imaging lens assembly so as to provide the appropriate imaging effect of the imaging lens assembly. In detail, two sides of the light diminishing structures 422 connect to the sidelines 423.

In the 1st example of the 4th embodiment, when the number of the sidelines 423 is N; the length of each of the sidelines 423 is TL, and the straight segment length of each of the sidelines 423 is D (its reference numeral is omitted); wherein the straight segment length D of each sidelines 423 is the sum of the segment lengths of each sidelines 423 minus the light diminishing structures 422, and the segment lengths of each sidelines 423 minus the light diminishing structures 422 are D1 and D2 respectively, that is, D = D1+D2; two of the nodes ND adjacent to each other form a connection line (its reference numeral is omitted), two of the connection lines adjacent to each other form a deflection angle θ (its reference numeral is omitted); wherein the connection lines overlap with the horizontal baseline LH; when each of the connection lines is parallel to each of the sidelines 423, the length of each of the connection lines is W, the vertical distance from a midpoint of each of the connection lines to the edge of the light blocking element 420 is H, the conditions related to the parameters can be satisfied as the following Table 4A.

| Table 4A | | | |
|---|---|---|---|
| N | 12 | D2 (mm) | 0.38 |
| TL (mm) | 1.22 | W ($\mu$m) | 200 |
| D (mm) | 0.82 | H ($\mu$m) | 30 |
| D/TL | 0.67 | H/W | 0.15 |
| D1 (mm) | 0.44 | θ (degrees) | 0 |

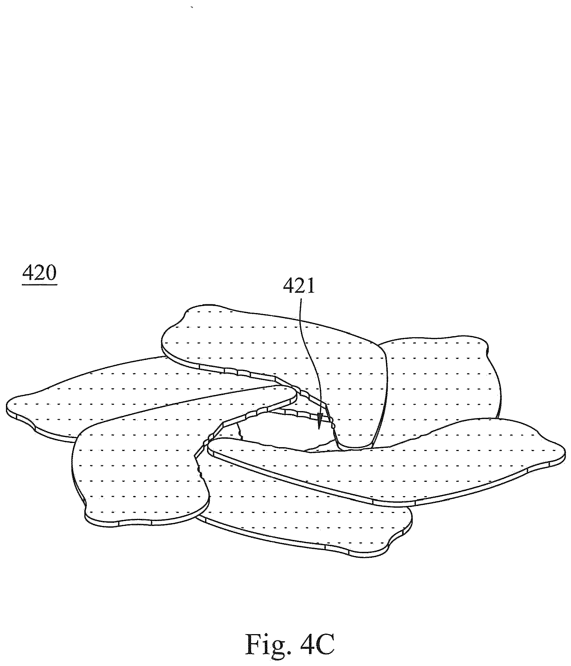

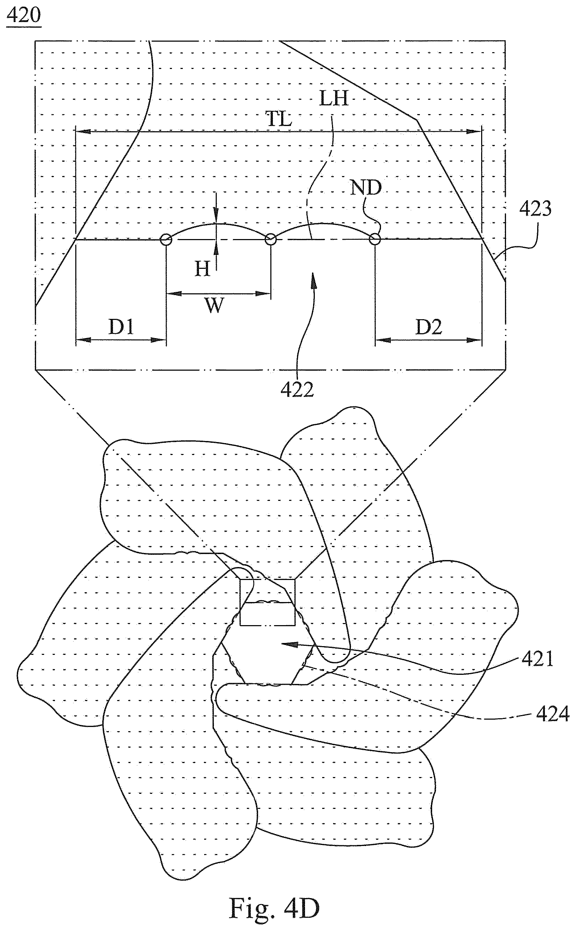

Fig. 4C a three-dimensional view of a light blocking element 420 according to the 2nd example of the 4th embodiment of the present disclosure not forming part of the claimed invention. Fig. 4D is the schematic view of the light blocking element 420 according to the 2nd example of the 4th embodiment of Fig. 4C. In Fig. 4C and Fig. 4D, the light diminishing structures 422 are configured to undulate at least one portion of each of the sidelines 423, so that the at least one portion of each of the sidelines 423 is a non-straight line. The appropriate imaging effect of the imaging lens assembly is provided by adjusting the ratio of the straight segment and the light diminishing structures 422. In the 2nd example of the 4th embodiment, the light through hole 421 is lessened by changing the angle between the light blocking sheets.

In detail, when each of the sidelines 423 is undulate, the light diminishing structure 422 is formed, one unit of the light diminishing structure 422 is between two straight line segments.

In the 2nd example of the 4th embodiment, each of the light diminishing structures 422 includes three nodes ND, the number of the sidelines 423 is N; the length of each of the sidelines 423 is TL; the straight segment length of each of the sidelines 423 is D (its reference numeral is omitted); wherein the straight segment length D of each sidelines 423 is the sum of the segment lengths of each sidelines 423 minus the light diminishing structures 422, and the segment lengths of each sidelines 423 minus the light diminishing structures 422 are D1 and D2 respectively, that is, D = D1+D2; two of the nodes ND adjacent to each other form a connection line (its reference numeral is omitted), two of the connection lines adjacent to each other form a deflection angle θ (its reference numeral is omitted); wherein the connection lines overlap with the horizontal baseline LH; when each of the connection lines is parallel to each of the sidelines 423, the length of each of the connection lines is W, the vertical distance from a midpoint of each of the connection lines to the edge of the light blocking element 420 is H, the conditions related to the parameters can be satisfied as the following Table 4B.

| Table 4B | | | |
|---|---|---|---|
| N | 6 | D2 (mm) | 0.21 |
| TL (mm) | 0.77 | W (μm) | 200 |
| D (mm) | 0.38 | H (μm) | 30 |
| D/TL | 0.49 | H/W | 0.15 |
| D1 (mm) | 0.17 | θ (degrees) | 0 |

<5th embodiment>

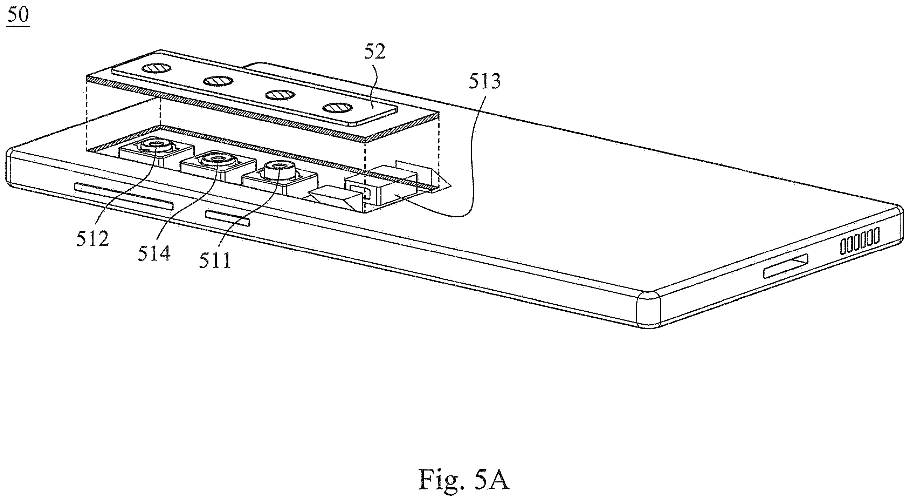

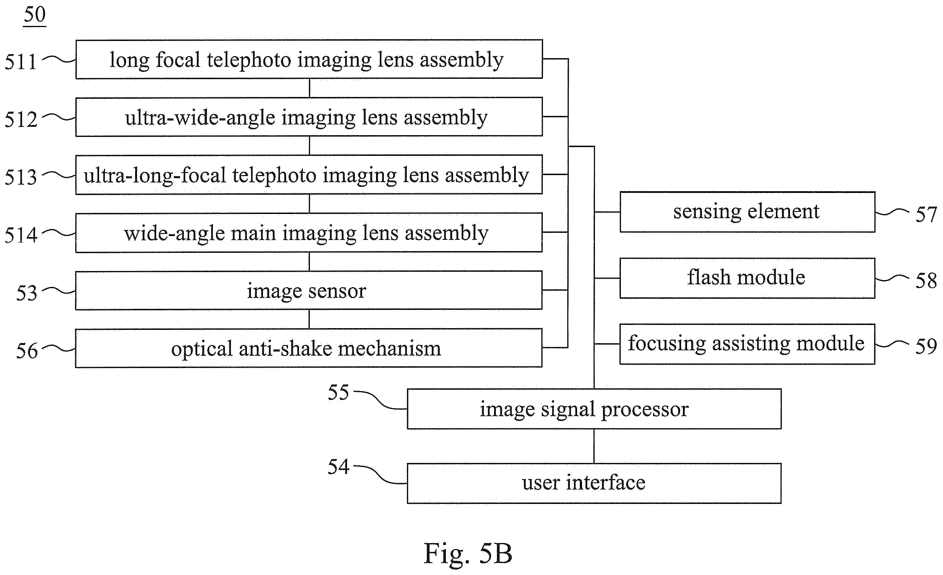

Fig. 5A is a schematic view of an electronic device 50 according to the 5th embodiment of the present disclosure. Fig. 5B is a block diagram of the electronic device 50 according to the 5th embodiment of Fig. 5A. In Fig. 5A and Fig. 5B, the electronic device 50 is a smart phone and an imaging lens assembly.

In the 5th embodiment, the electronic device 50 includes four imaging lens assemblies, which are a long focal telephoto imaging lens assembly 511, an ultra-wide-angle imaging lens assembly 512, an ultra-long-focal telephoto imaging lens assembly 513 and a wide-angle main imaging lens assembly 514. The field of view of the long focal telephoto imaging lens assembly 511 is 30 degrees to 60 degrees, the field of view of the ultra-wide-angle imaging lens assembly 512 is 93 degrees to 175 degrees, the field of view of the ultra-long-focal telephoto imaging lens assembly 513 is 5 degrees to 30 degrees, the field of view of the wide-angle main imaging lens assembly 514 is 65 degrees to 90 degrees, but is not limited thereto. Further, the electronic device 50 can accomplish the function of the optical zoom with switching different field of views of the imaging lens assemblies. It should be noted that an imaging lens assembly cover 52 is only for signifying the long focal telephoto imaging lens assembly 511, the ultra-wide-angle imaging lens assembly 512, the ultra-long-focal telephoto imaging lens assembly 513 and the wide-angle main imaging lens assembly 514 inside the electronic device 50, but not indicates that the imaging lens assembly cover 52 is removable. In detail, the long focal telephoto imaging lens assembly 511, the ultra-wide-angle imaging lens assembly 512, the ultra-long-focal telephoto imaging lens assembly 513 and the wide-angle main imaging lens assembly 514 can be any one of the aforementioned imaging lens assembly in the 1st embodiment to the 4th embodiment, but is not limited thereto.

The electronic device 50 further includes an image sensor 53 and a user interface 54. The image sensor 53 is disposed on the image surface (its number is omitted) of each of the long focal telephoto imaging lens assembly 511, the ultra-wide-angle imaging lens assembly 512, the ultra-long-focal telephoto imaging lens assembly 513 and the wide-angle main imaging lens assembly 514. The user interface 54 can be a touch screen or a display screen, but is not limited thereto.

Further, the user enters the shooting mode through the user interface 54 of the electronic device 50. The long focal telephoto imaging lens assembly 511, the ultra-wide-angle imaging lens assembly 512, the ultra-long-focal telephoto imaging lens assembly 513 and the wide-angle main imaging lens assembly 514 converge the imaging light on the image sensor 53 and output an electronic signal of the image to the image signal processor (ISP) 55.

To meet a specification of the camera module of the electronic device 50, the electronic device 50 can further include an optical anti-shake mechanism 56, which can be an optical image stabilization (OIS). Further, the electronic device 50 can further include at least one auxiliary optical element (its reference numeral is omitted) and at least one sensing element 57. According to the 5th embodiment, the auxiliary optical element is a flash module 58 and a focusing assisting module 59. The flash module 58 is for compensating a color temperature, and the focusing assisting module 59 can be an infrared distance measurement component, a laser focus module, etc. The sensing element 57 can have functions for sensing physical momentum and kinetic energy, such as an accelerator, a gyroscope, a Hall Effect Element, to sense shaking or jitters applied by hands of the user or external environments. Accordingly, an auto-focusing mechanism and the optical anti-shake mechanism 56 are disposed on the imaging lens assembly (which is the long focal telephoto imaging lens assembly 511, the ultra-wide-angle imaging lens assembly 512, the ultra-long-focal telephoto imaging lens assembly 513 and the wide-angle main imaging lens assembly 514) of the electronic device 50 can be enhanced to achieve the superior image quality. Further, the electronic device 50 according to the present disclosure can have a capturing function with multiple modes, such as taking optimized selfies, high dynamic range (HDR) under a low light condition, 4K resolution recording, etc. Further, the users can visually see a captured image of the camera through the touch screen and manually operate the view finding range on the touch screen to achieve the autofocus function of what you see is what you get.

Further, the electronic device 50 can further include, but not limited to a display unit, a control unit, a storage unit, a RAM, a ROM or other combinations.

## Claims

1. An imaging lens assembly (100), comprising:

   a lens element (111, 112, 113, 114, 115, 116, 117) configured to define an optical axis (X), and the optical axis (X) passing through the lens element (111, 112, 113, 114, 115, 116, 117); and
   a light blocking element (120), comprising:
   a light through hole (121), the optical axis (X) passing through the light through hole (121), the light through hole (121) formed by connecting a plurality of sidelines (123) to define a polygonal contour (124); and

   **characterised in that** the light blocking element (120) comprises
   a plurality of light diminishing structures (122) regularly disposed along the polygonal contour (124), wherein the light diminishing structures (122) are configured to undulate at least one portion of each of the sidelines (123), so that the at least one portion of each of the sidelines (123) is a non-straight line;

   wherein the light blocking element (120) is formed as a single part;
   wherein a number of the sidelines (123) is N, a length of each of the sidelines (123) is TL, a straight segment length of each of the sidelines (123) is D, and the following conditions are satisfied:

   $$4 \leq N \leq 18;$$

   and

   $$0.05 < D/TL < 0.95.$$

2. The imaging lens assembly (100) of claim 1, wherein a thickness of the light blocking element (120) along the optical axis (X) is T, and the following condition is satisfied:

   $$2 \ \mu m \leq T \leq 88 \ \mu m.$$

3. The imaging lens assembly (100) of any of claims 1-2, wherein the polygonal contour (124) is a regular polygon.

4. The imaging lens assembly (100) of any of claims 1-3, wherein the number of the sidelines (123) is N, and the following condition is satisfied:

   $$5 \leq N \leq 12.$$

5. The imaging lens assembly (100) of any of claims 1-4, wherein each of the light diminishing structures (122) comprises at least three nodes (ND), and the nodes (ND) satisfy any one of the following two definitions:

   each of two sides of each of the light diminishing structures (122) is one of the at least three nodes (ND); and
   a horizontal baseline (LH) is defined by a virtual connection line of the two sides of each of the light diminishing structures (122), when an edge of the light blocking element (120) is above and the light through hole (121) is below, a point where a contour slope of each of the light diminishing structures (122) changes from negative to positive is one of the at least three nodes (ND);
   wherein two of the at least three nodes (ND) adjacent to each other form a connection line (LN), two of the connection lines (LN) adjacent to each other form a deflection angle, the deflection angle is θ, and the following condition is satisfied:

$$0 \text{ degrees} \leq \theta \leq 20 \text{ degrees.}$$

6. The imaging lens assembly (100) of any of claims 1-5, wherein when each of the connection lines (LN) is parallel to each of the sidelines (123), a length of each of the connection lines (LN) is W, a vertical distance from a midpoint of each of the connection lines (LN) to the edge of the light blocking element (120) is H, and the following condition is satisfied:

$$0.04 \leq H/W \leq 0.7.$$

7. The imaging lens assembly (100) of any of claims 1-6, wherein a vertical distance from the midpoint of each of the connection lines (LN) to the edge of the light blocking element (120) is H, and the following condition is satisfied:

$$5 \ \mu m \leq H \leq 120 \ \mu m.$$

8. The imaging lens assembly (100) of any of claims 1-7, wherein the light through hole (121) of the light blocking element (120) is configured to define an f-number of the imaging lens assembly (100).

9. The imaging lens assembly (100) of any of claims 1-8, wherein the f-number of the imaging lens assembly (100) is FNO, and the following condition is satisfied:

$$0.65 \leq FNO \leq 1.8.$$

10. The imaging lens assembly (100) of any of claims 1-9, further comprising:
an anti-reflection layer disposed on an outer surface of the light blocking element (120).

11. An imaging lens assembly (100), comprising:

a lens element (111, 112, 113, 114, 115, 116, 117), an optical axis (X) passing through the lens element (111, 112, 113, 114, 115, 116, 117); and
a light blocking element (120), comprising:
a light through hole (121), the optical axis (X) passing through the light through hole (121), the light through hole (121) formed by connecting a plurality of sidelines (123) to define a polygonal contour (124); and

**characterised in that** the light blocking element (120) comprises
a plurality of light diminishing structures (122) regularly disposed along the polygonal contour (124), wherein the light diminishing structures (122) are configured to undulate each of the sidelines (123), so that the whole of each of the sidelines (123) is a non-straight line;
wherein each of the light diminishing structures (122) comprises at least three nodes (ND), and the nodes (ND) satisfy any one of the following two definitions:

each of two sides of each of the light diminishing structures (122) is one of the at least three nodes (ND); and
a horizontal baseline (LH) is defined by a virtual connection line of the two sides of each of the light diminishing structures (122), when an edge of the light blocking element (120) is above and the light through hole (121) is below, a point where a contour slope of each of the light diminishing structures (122) changes from negative to positive is one of the at least three nodes (ND);
wherein the light blocking element (120) is formed as a single part;
wherein a number of the sidelines (123) is N, two of the at least three nodes (ND) adjacent to each other form a connection line (LN), two of the connection lines (LN) adjacent to each other form a deflection angle, the deflection angle is $\theta$, and the following conditions are satisfied:

$$4 \leq N \leq 18;$$

and

$$0 \text{ degrees} \leq \theta \leq 20 \text{ degrees}.$$

12. The imaging lens assembly (100) of claim 11, wherein a length of each of the sidelines (123) is TL, a straight segment length of each of the sidelines (123) is D, and the following condition is satisfied:

$$0 < D/TL < 0.05.$$

13. The imaging lens assembly (100) of any of claims 11-12, wherein a thickness of the light blocking element (120) along the optical axis (X) is T, and the following condition is satisfied:

$$2 \ \mu m \leq T \leq 88 \ \mu m.$$

14. The imaging lens assembly (100) of any of claims 11-13, wherein the polygonal contour (124) is a regular polygon.

15. The imaging lens assembly (100) of any of claims 11-14, wherein the number of the sidelines (123) is N, and the following condition is satisfied:

$$5 \leq N \leq 12.$$

16. The imaging lens assembly (100) of any of claims 11-15, wherein when each of the connection lines (LN) is parallel to each of the sidelines (123), a length of each of the connection lines (LN) is W, a vertical distance from a midpoint of each of the connection lines (LN) to the edge of the light blocking element (120) is H, and the following condition is satisfied:

$$0.04 \leq H/W \leq 0.7.$$

17. The imaging lens assembly (100) of any of claims 11-16, wherein the vertical distance from the midpoint of each of the connection lines (LN) to the edge of the light blocking element (120) is H, and the following condition is satisfied:

$$5 \ \mu m \leq H \leq 120 \ \mu m.$$

18. The imaging lens assembly (100) of any of claims 11-17, wherein the light through hole (121) of the light blocking element (120) is configured to define an f-number of the imaging lens assembly (100).

19. The imaging lens assembly (100) of any of claims 11-18, wherein the f-number of the imaging lens assembly (100) is FNO, and the following condition is satisfied:

$$0.65 \leq FNO \leq 1.8.$$

20. The imaging lens assembly (100) of any of claims 11-19, further comprising:
an anti-reflection layer disposed on an outer surface of the light blocking element (120).

21. An electronic device (50), **characterized in** comprising:
the imaging lens assembly (100) of any of claims 1-20.

**Patentansprüche**

1. Bildgebungslinsenanordnung (100), umfassend:

ein Linsenelement (111, 112, 113, 114, 115, 116, 117), das dazu ausgestaltet ist, eine optische Achse (X) zu definieren, und wobei die optische Achse (X) durch das Linsenelement (111, 112, 113, 114, 115, 116, 117) verläuft; und
ein lichtblockierendes Element (120), umfassend:

ein Lichtdurchgangsloch (121), wobei die optische Achse (X) durch das Lichtdurchgangsloch (121) verläuft, wobei das Lichtdurchgangsloch (121) durch Verbinden einer Vielzahl von Seitenlinien (123) gebildet wird, um eine vieleckige Kontur (124) zu definieren; und

**dadurch gekennzeichnet, dass** das lichtblockierende Element (120) umfasst

eine Vielzahl von lichtvermindernden Strukturen (122), die regelmäßig entlang der vieleckigen Kontur (124) angeordnet sind, wobei die lichtvermindernden Strukturen (122) dazu ausgestaltet sind, mindestens einen Abschnitt jeder der Seitenlinien (123) wellenförmig zu machen, derart dass der mindestens eine Abschnitt jeder der Seitenlinien (123) eine nicht-gerade Linie ist;

wobei das lichtblockierende Element (120) als ein einziges Teil ausgebildet ist;

wobei eine Anzahl der Seitenlinien (123) N beträgt, eine Länge jeder der Seitenlinien (123) TL beträgt, eine Länge eines geraden Segments jeder der Seitenlinien (123) D beträgt und die folgenden Bedingungen erfüllt sind:

$$4 \leq N \leq 18;$$

und

$$0{,}05 < D/TL < 0{,}95.$$

2. Bildgebungslinsenanordnung (100) nach Anspruch 1, wobei eine Dicke des lichtblockierenden Elements (120) entlang der optischen Achse (X) T beträgt und die folgende Bedingung erfüllt ist:

$$2 \ \mu m \leq T \leq 88 \ \mu m.$$

3. Bildgebungslinsenanordnung (100) nach einem der Ansprüche 1 bis 2, wobei die vieleckige Kontur (124) ein regelmäßiges Vieleck ist.

4. Bildgebungslinsenanordnung (100) nach einem der Ansprüche 1 bis 3, wobei die Anzahl der Seitenlinien (123) N beträgt und die folgende Bedingung erfüllt ist:

$$5 \leq N \leq 12.$$

5. Bildgebungslinsenanordnung (100) nach einem der Ansprüche 1 bis 4, wobei jede der lichtvermindernden Strukturen (122) mindestens drei Knoten (ND) umfasst und die Knoten (ND) eine der folgenden zwei Definitionen erfüllen:

jede von zwei Seiten jeder der lichtvermindernden Strukturen (122) ist einer der mindestens drei Knoten (ND); und

eine horizontale Grundlinie (LH) ist durch eine virtuelle Verbindungslinie der zwei Seiten jeder der lichtvermindernden Strukturen (122) definiert, wenn ein Rand des lichtblockierenden Elements (120) oben und das Lichtdurchgangsloch (121) unten ist, ist ein Punkt, an dem eine Konturneigung jeder der lichtvermindernden Strukturen (122) von negativ zu positiv wechselt, einer der mindestens drei Knoten (ND);

wobei zwei der mindestens drei einander benachbarten Knoten (ND) eine Verbindungslinie (LN) bilden, zwei der einander benachbarten Verbindungslinien (LN) einen Ablenkungswinkel bilden, der Ablenkungswinkel θ beträgt und die folgende Bedingung erfüllt ist:

$$0 \ \text{Grad} \leq \theta \leq 20 \ \text{Grad}.$$

6. Bildgebungslinsenanordnung (100) nach einem der Ansprüche 1 bis 5, wobei, wenn jede der Verbindungslinien (LN) parallel zu jeder der Seitenlinien (123) ist, eine Länge jeder der Verbindungslinien (LN) W beträgt, ein vertikaler Abstand von einem Mittelpunkt jeder der Verbindungslinien (LN) zum Rand des lichtblockierenden Elements (120) H beträgt und die folgende Bedingung erfüllt ist:

$$0{,}04 \leq H/W \leq 0{,}7.$$

7. Bildgebungslinsenanordnung (100) nach einem der Ansprüche 1 bis 6, wobei ein vertikaler Abstand vom Mittelpunkt jeder der Verbindungslinien (LN) zum Rand des lichtblockierenden Elements (120) H beträgt und die folgende Bedingung erfüllt ist:

$$5\ \mu m \le H \le 120\ \mu m.$$

8. Bildgebungslinsenanordnung (100) nach einem der Ansprüche 1 bis 7, wobei das Lichtdurchgangsloch (121) des lichtblockierenden Elements (120) dazu ausgestaltet ist, eine Blendenzahl der Bildgebungslinsenanordnung (100) zu definieren.

9. Bildgebungslinsenanordnung (100) nach einem der Ansprüche 1 bis 8, wobei die Blendenzahl der Bildgebungslinsenanordnung (100) FNO beträgt und die folgende Bedingung erfüllt ist:

$$0,65 \le FNO \le 1,8.$$

10. Bildgebungslinsenanordnung (100) nach einem der Ansprüche 1 bis 9, ferner umfassend:
eine Antireflexionsschicht, die auf einer äußeren Oberfläche des lichtblockierenden Elements (120) angeordnet ist.

11. Bildgebungslinsenanordnung (100), umfassend:

ein Linsenelement (111, 112, 113, 114, 115, 116, 117), eine optische Achse (X), die durch das Linsenelement (111, 112, 113, 114, 115, 116, 117) verläuft; und
ein lichtblockierendes Element (120), umfassend:
ein Lichtdurchgangsloch (121), wobei die optische Achse (X) durch das Lichtdurchgangsloch (121) verläuft, wobei das Lichtdurchgangsloch (121) durch Verbinden einer Vielzahl von Seitenlinien (123) gebildet wird, um eine vieleckige Kontur (124) zu definieren; und
**dadurch gekennzeichnet, dass** das lichtblockierende Element (120) umfasst
eine Vielzahl von lichtvermindernden Strukturen (122), die regelmäßig entlang der vieleckigen Kontur (124) angeordnet sind, wobei die lichtvermindernden Strukturen (122) dazu ausgestaltet sind, jede der Seitenlinien (123) wellenförmig zu machen, derart dass die Gesamtheit jeder der Seitenlinien (123) eine nicht-gerade Linie ist; wobei jede der lichtvermindernden Strukturen (122) mindestens drei Knoten (ND) umfasst und die Knoten (ND) eine der folgenden zwei Definitionen erfüllen:

jede von zwei Seiten jeder der lichtvermindernden Strukturen (122) ist einer der mindestens drei Knoten (ND); und
eine horizontale Grundlinie (LH) ist durch eine virtuelle Verbindungslinie der zwei Seiten jeder der lichtvermindernden Strukturen (122) definiert, wenn ein Rand des lichtblockierenden Elements (120) oben und das Lichtdurchgangsloch (121) unten ist, ist ein Punkt, an dem eine Konturneigung jeder der lichtvermindernden Strukturen (122) von negativ zu positiv wechselt, einer der mindestens drei Knoten (ND);
wobei das lichtblockierende Element (120) als ein einziges Teil ausgebildet ist;
wobei eine Anzahl der Seitenlinien (123) N beträgt, zwei der mindestens drei einander benachbarten Knoten (ND) eine Verbindungslinie (LN) bilden, zwei der einander benachbarten Verbindungslinien (LN) einen Ablenkungswinkel bilden, der Ablenkungswinkel θ beträgt und die folgenden Bedingungen erfüllt sind:

$$4 \le N \le 18;$$

und

$$0\ \text{Grad} \le \theta \le 20\ \text{Grad.}$$

12. Bildgebungslinsenanordnung (100) nach Anspruch 11, wobei eine Länge jeder der Seitenlinien (123) TL beträgt, eine Länge eines geraden Segments jeder der Seitenlinien (123) D beträgt und die folgende Bedingung erfüllt ist:

$$0 < D/TL < 0,05.$$

13. Bildgebungslinsenanordnung (100) nach einem der Ansprüche 11 bis 12, wobei eine Dicke des lichtblockierenden Elements (120) entlang der optischen Achse (X) T beträgt und die folgende Bedingung erfüllt ist:

$$2\ \mu m \le T \le 88\ \mu m.$$

**14.** Bildgebungslinsenanordnung (100) nach einem der Ansprüche 11 bis 13, wobei die vieleckige Kontur (124) ein regelmäßiges Vieleck ist.

**15.** Bildgebungslinsenanordnung (100) nach einem der Ansprüche 11 bis 14, wobei die Anzahl der Seitenlinien (123) N beträgt und die folgende Bedingung erfüllt ist:

$$5 \le N \le 12.$$

**16.** Bildgebungslinsenanordnung (100) nach einem der Ansprüche 11 bis 15, wobei, wenn jede der Verbindungslinien (LN) parallel zu jeder der Seitenlinien (123) ist, eine Länge jeder der Verbindungslinien (LN) W beträgt, ein vertikaler Abstand von einem Mittelpunkt jeder der Verbindungslinien (LN) zum Rand des lichtblockierenden Elements (120) H beträgt und die folgende Bedingung erfüllt ist:

$$0{,}04 \le H/W \le 0{,}7.$$

**17.** Bildgebungslinsenanordnung (100) nach einem der Ansprüche 11 bis 16, wobei der vertikale Abstand vom Mittelpunkt jeder der Verbindungslinien (LN) zum Rand des lichtblockierenden Elements (120) H beträgt und die folgende Bedingung erfüllt ist:

$$5\ \mu m \le H \le 120\ \mu m.$$

**18.** Bildgebungslinsenanordnung (100) nach einem der Ansprüche 11 bis 17, wobei das Lichtdurchgangsloch (121) des lichtblockierenden Elements (120) dazu ausgestaltet ist, eine Blendenzahl der Bildgebungslinsenanordnung (100) zu definieren.

**19.** Bildgebungslinsenanordnung (100) nach einem der Ansprüche 11 bis 18, wobei die Blendenzahl der Bildgebungslinsenanordnung (100) FNO beträgt und die folgende Bedingung erfüllt ist:

$$0{,}65 \le FNO \le 1{,}8.$$

**20.** Bildgebungslinsenanordnung (100) nach einem der Ansprüche 11 bis 19, ferner umfassend:
eine Antireflexionsschicht, die auf einer äußeren Oberfläche des lichtblockierenden Elements (120) angeordnet ist.

**21.** Elektronische Vorrichtung (50), **dadurch gekennzeichnet, dass** sie umfasst:
die Bildgebungslinsenanordnung (100) nach einem der Ansprüche 1 bis 20.


**Revendications**

**1.** Ensemble objectif d'imagerie (100), comprenant :

un élément de lentille (111, 112, 113, 114, 115, 116, 117) configuré pour définir un axe optique (X), et l'axe optique (X) passant à travers l'élément de lentille (111, 112, 113, 114, 115, 116, 117) ; et
un élément de blocage de lumière (120), comprenant :

un trou passant la lumière (121), l'axe optique (X) passant à travers le trou passant la lumière (121), le trou passant la lumière (121) étant formé en connectant une pluralité de lignes latérales (123) pour définir un contour polygonal (124) ; et
**caractérisé en ce que** l'élément de blocage de lumière (120) comprend :

une pluralité de structures de réduction de lumière (122) disposées de manière régulière le long du contour polygonal (124), dans lequel les structures de réduction de lumière (122) sont configurées pour onduler au moins une partie de chacune des lignes latérales (123), de sorte que l'au moins une partie de chacune des lignes latérales (123) est une ligne non droite ;

dans lequel l'élément de blocage de lumière (120) est formé d'une seule pièce ;

dans lequel un nombre des lignes latérales (123) est N, une longueur de chacune des lignes latérales (123) est TL, une longueur de segment droit de chacune des lignes latérales (123) est D, et les conditions suivantes sont satisfaites :

$$4 \leq N \leq 18 \: ;$$

et

$$0{,}05 < D/TL < 0{,}95.$$

2. Ensemble objectif d'imagerie (100) selon la revendication 1, dans lequel une épaisseur de l'élément de blocage de lumière (120) le long de l'axe optique (X) est T, et la condition suivante est satisfaite :

$$2 \: \mu m \leq T \leq 88 \: \mu m.$$

3. Ensemble objectif d'imagerie (100) selon l'une des revendications 1-2, dans lequel le contour polygonal (124) est un polygone régulier.

4. Ensemble objectif d'imagerie (100) selon l'une des revendications 1-3, dans lequel le nombre des lignes latérales (123) est N, et la condition suivante est satisfaite :

$$5 \leq N \leq 12.$$

5. Ensemble objectif d'imagerie (100) selon l'une des revendications 1-4, dans lequel chacune des structures de réduction de lumière (122) comprend au moins trois nœuds (ND), et les nœuds (ND) satisfont l'une quelconque des deux définitions suivantes :

chacun des deux côtés de chacune des structures de réduction de lumière (122) est l'un parmi les au moins trois nœuds (ND) ; et

une ligne de base horizontale (LH) est définie par une ligne de connexion virtuelle des deux côtés de chacune des structures de réduction de lumière (122), lorsqu'un bord de l'élément de blocage de lumière (120) est en-dessus et le trou passant la lumière (121) est en-dessous, un point où une pente de contour de chacune des structures de réduction de lumière (122) change de négative à positive est l'un parmi les au moins trois nœuds (ND) ;

dans lequel deux parmi les au moins trois nœuds (ND) adjacents l'un à l'autre forment une ligne de connexion (LN), deux des lignes de connexion (LN) adjacentes l'une à l'autre forment un angle de déviation, l'angle de déviation est θ, et la condition suivante est satisfaite :

$$0 \: \text{degrés} \leq \theta \leq 20 \: \text{degrés.}$$

6. Ensemble objectif d'imagerie (100) selon l'une des revendications 1-5, dans lequel, lorsque chacune des lignes de connexion (LN) est parallèle à chacune des lignes latérales (123), une longueur de chacune des lignes de connexion (LN) est W, une distance verticale d'un point médian de chacune des lignes de connexion (LN) jusqu'au bord de l'élément de blocage de lumière (120) est H, et la condition suivante est satisfaite :

$$0{,}04 \leq H/W \leq 0{,}7.$$

7. Ensemble objectif d'imagerie (100) selon l'une des revendications 1-6, dans lequel une distance verticale du point médian de chacune des lignes de connexion (LN) jusqu'au bord de l'élément de blocage de lumière (120) est H, et la condition suivante est satisfaite :

$$5 \: \mu m \leq H \leq 120 \: \mu m.$$

8. Ensemble objectif d'imagerie (100) selon l'une des revendications 1-7, dans lequel le trou passant la lumière (121) de l'élément de blocage de lumière (120) est configuré pour définir un nombre f de l'ensemble objectif d'imagerie (100).

9. Ensemble objectif d'imagerie (100) selon l'une des revendications 1-8, dans lequel le nombre f de l'ensemble objectif d'imagerie (100) est FNO, et la condition suivante est satisfaite :

$$0{,}65 \leq \mathrm{FNO} \leq 1{,}8.$$

10. Ensemble objectif d'imagerie (100) selon l'une des revendications 1-9, comprenant en outre :
une couche antireflet disposée sur une surface externe de l'élément de blocage de lumière (120).

11. Ensemble objectif d'imagerie (100), comprenant :

un élément de lentille (111, 112, 113, 114, 115, 116, 117), un axe optique (X) passant à travers l'élément de lentille (111, 112, 113, 114, 115, 116, 117) ; et
un élément de blocage de lumière (120), comprenant :

un trou passant la lumière (121), l'axe optique (X) passant à travers le trou passant la lumière (121), le trou passant la lumière (121) étant formé en connectant une pluralité de lignes latérales (123) pour définir un contour polygonal (124) ; et
**caractérisé en ce que** l'élément de blocage de lumière (120) comprend :

une pluralité de structures de réduction de lumière (122) disposées de manière régulière le long du contour polygonal (124), dans lequel les structures de réduction de lumière (122) sont configurées pour onduler chacune des lignes latérales (123), de sorte que la totalité de chacune des lignes latérales (123) est une ligne non droite ;
dans lequel chacune des structures de réduction de lumière (122) comprend au moins trois nœuds (ND), et les nœuds (ND) satisfont l'une quelconque des deux définitions suivantes :

chacun des deux côtés de chacune des structures de réduction de lumière (122) est l'un parmi les au moins trois nœuds (ND) ; et
une ligne de base horizontale (LH) est définie par une ligne de connexion virtuelle des deux côtés de chacune des structures de réduction de lumière (122), lorsqu'un bord de l'élément de blocage de lumière (120) est en-dessus et le trou passant la lumière (121) est en-dessous, un point où une pente de contour de chacune des structures de réduction de lumière (122) change de négative à positive est l'un parmi les au moins trois nœuds (ND) ;
dans lequel l'élément de blocage de lumière (120) est formé d'une seule pièce ;
dans lequel un nombre des lignes latérales (123) est N, deux parmi les au moins trois nœuds (ND) adjacents l'un à l'autre forment une ligne de connexion (LN), deux des lignes de connexion (LN) adjacentes l'une à l'autre forment un angle de déviation, l'angle de déviation est θ, et les conditions suivantes sont satisfaites :

$$4 \leq \mathrm{N} \leq 18 \; ;$$

et

$$0 \text{ degrés} \leq \theta \leq 20 \text{ degrés}.$$

12. Ensemble objectif d'imagerie (100) selon la revendication 11, dans lequel une longueur de chacune des lignes latérales (123) est TL, une longueur de segment droit de chacune des lignes latérales (123) est D, et la condition suivante est satisfaite :

$$0 < \mathrm{D/TL} < 0{,}05.$$

13. Ensemble objectif d'imagerie (100) selon l'une des revendications 11-12, dans lequel une épaisseur de l'élément de blocage de lumière (120) le long de l'axe optique (X) est T, et la condition suivante est satisfaite :

$$2 \text{ μm} \leq T \leq 88 \text{ μm}.$$

**14.** Ensemble objectif d'imagerie (100) selon l'une des revendications 11-13, dans lequel le contour polygonal (124) est un polygone régulier.

**15.** Ensemble objectif d'imagerie (100) selon l'une des revendications 11-14, dans lequel le nombre des lignes latérales (123) est N, et la condition suivante est satisfaite :

$$5 \leq N \leq 12.$$

**16.** Ensemble objectif d'imagerie (100) selon l'une des revendications 11-15, dans lequel, lorsque chacune des lignes de connexion (LN) est parallèle à chacune des lignes latérales (123), une longueur de chacune des lignes de connexion (LN) est W, une distance verticale d'un point médian de chacune des lignes de connexion (LN) jusqu'au bord de l'élément de blocage de lumière (120) est H, et la condition suivante est satisfaite :

$$0{,}04 \leq H/W \leq 0{,}7.$$

**17.** Ensemble objectif d'imagerie (100) selon l'une des revendications 11-16, dans lequel la distance verticale du point médian de chacune des lignes de connexion (LN) jusqu'au bord de l'élément de blocage de lumière (120) est H, et la condition suivante est satisfaite :

$$5 \text{ μm} \leq H \leq 120 \text{ μm}.$$

**18.** Ensemble objectif d'imagerie (100) selon l'une des revendications 11-17, dans lequel le trou passant la lumière (121) de l'élément de blocage de lumière (120) est configuré pour définir un nombre f de l'ensemble objectif d'imagerie (100).

**19.** Ensemble objectif d'imagerie (100) selon l'une des revendications 11-18, dans lequel le nombre f de l'ensemble objectif d'imagerie (100) est FNO, et la condition suivante est satisfaite :

$$0{,}65 \leq \text{FNO} \leq 1{,}8.$$

**20.** Ensemble objectif d'imagerie (100) selon l'une des revendications 11-19, comprenant en outre :
une couche antireflet disposée sur une surface externe de l'élément de blocage de lumière (120).

**21.** Dispositif électronique (50), **caractérisé en ce qu'**il comprend :
l'ensemble objectif d'imagerie (100) selon l'une des revendications 1-20.

Fig. 1A

Fig. 1B

Fig. 1C

120

LH

123

ND

PO | NE | PO | NE | PO | NE

121

VL    VL    VL    VL    VL

122

Fig. 1D

Fig. 1E

Fig. 1F

Fig. 2A

Fig. 2B

Fig. 2C

Fig. 2D

Fig. 2E

Fig. 3A

320

Fig. 3B

Fig. 3C

420

421

Fig. 4A

Fig. 4B

420

421

Fig. 4C

Fig. 4D

Fig. 5A

EP 4 310 555 B1

EP 4 310 555 B1

## 50

| | |
|---|---|
| 511 | long focal telephoto imaging lens assembly |
| 512 | ultra-wide-angle imaging lens assembly |
| 513 | ultra-long-focal telephoto imaging lens assembly |
| 514 | wide-angle main imaging lens assembly |
| 53 | image sensor |
| 56 | optical anti-shake mechanism |

| | |
|---|---|
| sensing element | 57 |
| flash module | 58 |
| focusing assisting module | 59 |

| | |
|---|---|
| 55 | image signal processor |
| 54 | user interface |

Fig. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180196171 A1

- US 3675562 A